# EUROPEAN PATENT APPLICATION

(11) **EP 4 506 214 A1**
(43) Date of publication of application: **12.02.2025**
(21) Application number: 24181201.5
(22) Date of filing: 10.06.2024
(51) Int. Cl.: B60R 25/04, B60R 25/20, B60R 25/24, G07C 5/00, G07C 9/00

(54) **REMOTE STARTING SYSTEM**

(30) Priority: 09.08.2023 US 202363531633 P; 07.06.2024 US 202418737147
(71) Applicant: Deere & Company, Moline, IL 61265 (US)
(72) Inventor: Schulte, Kayla, Winterset (US); Nguyen, Quang, Des Moines (US); Pfohl, Kevin, Potosi (US); Whitaker, Lane, Platteville (US); Dolson, Mark, Moline (US); Hohaus, Troy, Moline (US); Less, Matthew, Moline (US)
(74) Representative: Reddie & Grose LLP

(57) **Abstract**

Systems and methods for remotely starting a vehicle are described. An example system includes a control system operatively connected to the vehicle and to a remote or a host device. The control system receives vehicle data from the vehicle concerning safety and operating attributes associated with the vehicle, and compares the vehicle data relative to start up criteria associated with the vehicle to generate a start status. The control system controls remote access to start the vehicle based on the start status.

## Description

### SUMMARY

The following presents a simplified summary of the disclosure in order to provide a basic understanding of some example aspects described in the detailed description. This summary is not an extensive overview. Moreover, this summary is not intended to identify critical elements of the disclosure nor delineate the scope of the disclosure. The sole purpose of the summary is to present some concepts in simplified form as a prelude to the more detailed description that is presented later.

A method and system for controlling remote access to start a vehicle is described herein. The system receives data from the vehicle concerning safety and/or operating attributes of the vehicle, and assesses the data relative to startup criteria to control access to start the vehicle.

In accordance with one example, the system includes a control system operatively connected to said vehicle via a communications network, said control system comprising a processor and a memory. The control system comprises logic to: receive vehicle data from said vehicle; retrieve startup criteria associated with said vehicle; compare said vehicle data relative to said startup criteria to generate a start status during a system check; and control remote access to start said vehicle based on said start status.

In accordance with an example, the control system further comprises logic to send a notification to a remote device and/or a host device communicatively coupled with the control system indicating when said vehicle will be ready to operate based on said start status.

In accordance with an example, the system further comprises a remote device communicatively coupled with the control system, wherein the remote device includes a user interface adapted to graphically display at least one of a: location of said vehicle, the vehicle data, and said start status.

In accordance with an example, the user interface is operable to remotely start the vehicle if said vehicle data satisfies said startup criteria.

In accordance with an example, the vehicle data comprises safety data and operating data, wherein said safety data comprises at least one of: a parking brake status, a hydraulic system status, a filter saturation level, a service panel position, a door position, an operator status, and wherein said operating data comprises at least one of a: a fuel level, a transmission fluid level, a hydraulic fluid level, an oil level, an oil filter status, a grease level, a power steering fluid level, a diesel emission fluid level, a battery charge level, an alternator status, tire pressure level, a hydraulic fluid pressure, a geographic location of the vehicle, a temperature of fuel, service hours, hours until next service, a temperature of a combustion chamber, a temperature of combustion air, a cabin temperature, a hydraulic fluid temperature, a transmission fluid temperature, an oil temperature, and a diagnostic trouble code.

In accordance with an example, the control system comprises logic to actuate a heating and cooling system of said vehicle when said vehicle data does not satisfy said startup criteria.

In accordance with an example, the control system further comprises logic to: receive updated vehicle data from said vehicle; retrieve post-start operating criteria associated with said vehicle; compare said updated vehicle data relative to said post-start operating criteria to generate an operating status; and control power to said vehicle based on said operating status.

In accordance with an example, the updated vehicle data comprises at least one of: an access panel position, a door position, a current fuel level, a current hydraulic fluid level, a current transmission fluid level, a current tire pressure, a current operator status, a trouble code, a current vehicle temperature, and a geographic location of said vehicle.

In accordance with an example, the system further comprises a remote device communicatively coupled with the control system, wherein the remote device includes a user interface, wherein the user interface is adapted to display at least one of: the updated vehicle data, the operating status, and/or a location of said vehicle.

In accordance with an example, the control system further comprises logic to: determine an operator status via a sensor operatively connected to said vehicle; and control power to said vehicle based on said operator status.

In accordance with an example, the control system comprises logic to authenticate a start command to start said vehicle based on start command data and vehicle identifier data.

In accordance with an example, the system further comprises a remote device communicatively coupled with the control system, wherein the control system comprises logic to enable the remote device to start said vehicle via an app when said vehicle data satisfies the startup criteria.

In accordance with an example, the control system comprises logic to actuate an ignition system of said vehicle based on the start status.

In accordance with an example, the control system comprises logic to transmit a countdown to a remote device and/or a host device communicatively coupled with the control system, said countdown defining a time until said vehicle will be operational.

In accordance with an example, the control system comprises logic to actuate a light or a horn of said vehicle when said vehicle is being started.

### BRIEF DESCRIPTION OF THE DRAWINGS

The above and other features, examples and advantages of aspects or examples of the present disclosure are better understood when the following detailed description is read with reference to the accompanying drawings, wherein:
FIG. 1 is a block diagram of an example system for controlling access to start a vehicle according to the present disclosure.
FIG. 2A is a block diagram of an example system for controlling remote access to start a vehicle according to the present disclosure.
FIG. 2B is a flowchart of an example method of authenticating a user.
FIG. 3A is a block diagram of another example system for controlling remote access to start a vehicle according to the present disclosure.
FIG. 3B is schematic diagram illustrating an example bypass channel of a heating and cooling system.
FIG. 4 is a block diagram of an example system for operating a vehicle according to the present disclosure.
FIG. 5 is a flowchart of an example method of controlling access to start a vehicle according to the present disclosure.
FIG. 6 is a flowchart of another example method of controlling access to start a vehicle according to the present disclosure.
FIG. 7 is a flowchart of an example method of operating a vehicle according to the present disclosure.
FIG. 8A is a flowchart of an example method of monitoring, receiving, and transmitting safety data.
FIG. 8B is a flowchart of an example method of monitoring, receiving, and transmitting operating data.
FIG. 8C is a flowchart of an example method of monitoring, receiving, and transmitting post-start operating data.
FIG. 9 is an illustration of an exemplary graphic user interface in accordance with the present disclosure.
FIG. 10 is an illustration of another exemplary graphic user in accordance with the present disclosure.
FIG. 11A is an illustration of another exemplary graphic user interface in accordance with the present disclosure.
FIG. 11B is another illustration of the exemplary graphic user interface of FIG. 11A.
FIG. 11C is another illustration of the exemplary graphic user interface of FIG. 11A.
FIG. 11D is another illustration of the exemplary graphic user interface of FIG. 11A.
FIG. 11E is another illustration of the exemplary graphic user interface of FIG. 11A.
FIG. 11F is another illustration of the exemplary graphic user interface of FIG. 11A.
FIG. 11G is a partial, closeup view of the exemplary graphic user interface of FIG. 11A.
FIG. 11H is a partial, closeup view of the exemplary graphic user interface of FIG. 11A.
FIG. 11I is a partial, closeup view of the exemplary graphic user interface of FIG. 11A.
FIG. 12A is an illustration of another exemplary graphic user interface in accordance with the present disclosure.
FIG. 12B is another illustration of the exemplary graphic user interface of FIG. 12A.
FIG. 12C is another illustration of the exemplary graphic user interface of FIG. 12A.
FIG. 12D is another illustration of the exemplary graphic user interface of FIG. 12A.

### DETAILED DESCRIPTION

Reference will now be made in detail to exemplary embodiments of the present disclosure, examples of which are illustrated in the accompanying drawings. It is to be understood that other embodiments may be utilized, and structural and functional changes may be made without departing from the scope of the present disclosure. Moreover, features of the various embodiments may be combined or altered without departing from the scope of the present disclosure. As such, the following description is presented by way of illustration only and should not limit in any way the various alternatives and modifications that may be made to the illustrated embodiments and still be within the scope of the present disclosure.

As used herein, the words "example" and "exemplary" mean an instance, or illustration. The words "example" or "exemplary" do not indicate a key or preferred aspect or embodiment. The word "or" is intended to be inclusive rather than exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggests otherwise.

"Component" and "module," as used herein, includes, but is not limited to a portion of hardware, firmware, or software, or a combination thereof to perform a specified function or action as described herein. A portion of hardware can include at least a processor and a portion of memory, wherein the memory may include computer executable instructions.

Operating an industrial vehicle (e.g., a crawler, an excavator, a loader, etc.) requires an abundance of care, particularly when considering the potential safety hazards associated with the vehicle, for example, the size and weight of the vehicle, exposure to exhaust emission, an unsecured door or panel, or accidental contact with a hydraulic powered implement (e.g., a bucket, shovel, plow, hoe, etc.) of the vehicle. Many industries require operators to perform a physical inspection before starting the vehicle to circumvent such hazards. For example, the operator may be required to check safety attributes of the vehicle, such as a hydraulics or parking brake status, a door or access panel status, or a saturation level of a particulate filter (e.g., a diesel particulate filter).

In some cases, the operator may be required to perform a maintenance inspection of the vehicle to determine the vehicle's readiness for operation. This could entail physically checking tire pressure, oil temperature, hydraulic fluid temperature, fuel temperature, and an engine compartment temperature (e.g., of the combustion chamber), or fluid levels (e.g., hydraulic fluid, fuel, transmission fluid, coolant, grease, diesel emission fluid, etc.). In cold climates, the operator may be required to preheat the vehicle (e.g., the fuel, combustion chamber, hydraulic/transmission fluids, the cabin, etc.) before operating the vehicle. However, paying an operator to perform such activities can be very costly. For example, the operator may take excessive time to perform an inspection, leading to excessive idling, thereby wasting fuel and hindering productivity (e.g., delaying the start of the work day). In other cases, an operator may be paid to merely wait for the vehicle to be heated before starting or otherwise operating the vehicle. As such, there is a need to prepare the vehicle more efficiently before operating the vehicle.

As described herein, a system performs an inspection of the vehicle and signifies when the vehicle is ready to be operated. In some examples, the system receives vehicle data from the vehicle and assesses the vehicle data relative to startup criteria to control access to start the vehicle. In some examples, the vehicle data may include safety data regarding a hydraulics or parking brake status, a door or access panel status, or a particulate filter status. In some examples, the vehicle data may include operating data, for example, an oil temperature, a hydraulic oil temperature, an engine compartment temperature (e.g., a combustion chamber temperature), a fluid level status (e.g., of hydraulic fluid, fuel, transmission, coolant, grease, or diesel emission fluid), a tire pressure status, an alternator status, or a battery charge level.

In some examples, the system compares the vehicle data relative to the startup criteria to determine a start status and controls access to start the vehicle based on the start status. In some embodiments, the start status may indicate that the vehicle data satisfies startup criteria, whereupon the system enables access to start the vehicle. In other embodiments, the start status may indicate that the vehicle data does not satisfy the startup criteria, whereupon the system inhibits access to the start the vehicle. In some examples, the system continuously monitors the vehicle during an operation thereof and receives updated vehicle data therefrom. The updated vehicle data may include post-start operating data indicating an abnormal temperature (e.g., indicative of a fire), an undetected operator presence, a service door or access panel being open, or any other examples of operating data discussed herein. In some embodiments, the system may compare the updated vehicle data relative to post-start operating criteria to determine an operating status. In some examples, the operating status may indicate that the updated vehicle data satisfies the post-start operating criteria, whereupon the system maintains power to the vehicle. In some examples, the operating status may indicate that the updated vehicle data does not satisfy the post-start operating criteria, whereupon the system disables power to the vehicle and/or initiates an automatic shutdown of the vehicle.

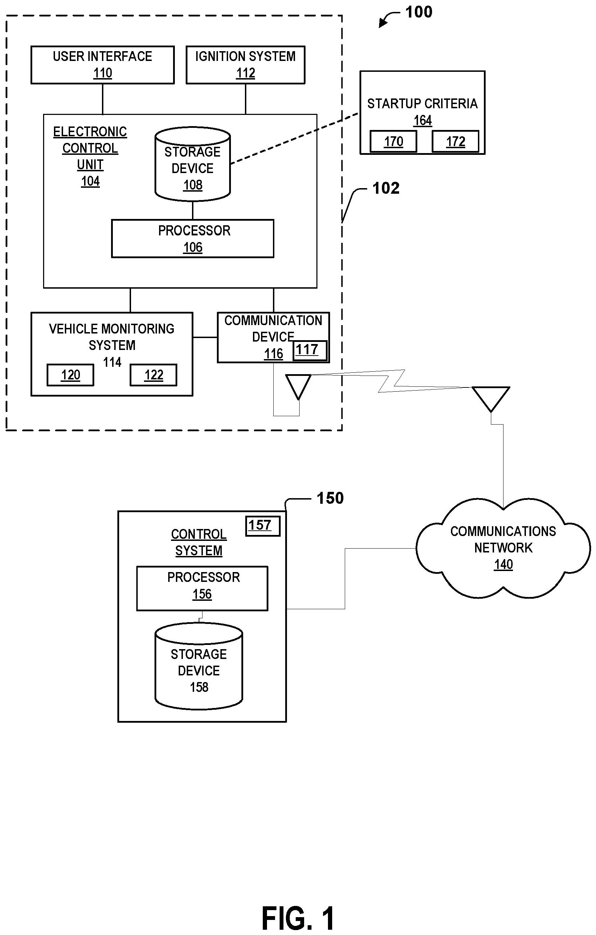

FIG. 1 is a block diagram of an example system 100 for monitoring a vehicle's readiness for operation and controlling access to start a vehicle 102 according to the present disclosure. In the illustrated example, the system 100 includes a vehicle 102 operatively connected to a control system 150 via a communications network 140. In the illustrated embodiment, the control system 150 is depicted as a standalone system. It is contemplated that the control system 150 may be integrated with the vehicle 102 and/or form part of the vehicle's electronic control unit 104 (e.g., as a subsystem thereof). It is also contemplated that in other examples, two or more vehicles may be operatively connected to the control system 150.

The communications network 140 may embody a wireless network to facilitate communication between the vehicle 102 and the control system 150 over a wide area network (e.g., such as a cellular network (e.g., Global System for Mobile Communications ("GSM"), Universal Mobile Telecommunications System ("UMTS"), Long Term Evolution ("LTE"), Code Division Multiple Access ("CDMA"), etc.), a satellite communication network, WiMAX ("IEEE 802.16m), etc.), and/or a location area network (e.g., IEEE 802.11 a/b/g/n/ac, etc.). In some examples, the control system 150 may be communicatively coupled to the communications network 140 over a public network, such as the Internet; a private network, such as an intranet; or combinations thereof. Yet, in other embodiments, it is contemplated that the vehicle 102 may be communicatively coupled with the control system 150 via a Bluetooth^{®} connection or via another form of direct connection (e.g., a wired physical connection), which shall also be considered as one type of a communication network 140.

In some embodiments, the vehicle 102 and/or the communications network 140 may include an encryption component for encoding the vehicle data to preserve the security and/or authenticity of the data before it is transmitted to the control system 150. In the embodiment shown, the encryption component 117 is depicted as a standalone, sub-component of the communication device 116. It is contemplated that the encryption component 117 may be integrated with the communication device 116 or that it may form part of another part of the vehicle, e.g., the electronic control unit 104. In some embodiments, the encryption component 117 may comprise logic to generate an encryption key or cypher text corresponding to the vehicle data. In some embodiments, each vehicle 102 may comprise a unique identifier (e.g., a serial number, fleet identifier, model number, and the like) that is encoded via the encryption component 117. In some embodiments, the control system 150 may comprise a decryption component 157 comprising logic to decode the encoded vehicle data (e.g., from cypher text to plain text) transmitted from the vehicle 102.

In the illustrated example, the vehicle 102 includes an electronic control unit 104 operatively connected to a user interface 110, an ignition system 112, a vehicle monitoring system 114, and a communication device 116. In some examples, it is contemplated that the vehicle 102 may include a data bus for facilitating communication between various electronic components of the vehicle 102. In some examples, it is contemplated that the user interface 110 may be independent from the vehicle 102 and operatively connected thereto via the communications network 140.

The electronic control unit 104 includes a processor 106 and a storage device 108. The processor 106 may embody any suitable processing device or set of processing devices such as, but not limited to: a microprocessor, a microcontroller-based platform, a suitable integrated circuit, one or more field programmable gate arrays (FPGAs), and/or one or more application-specific integrated circuits (ASICs). The storage device 108 may be volatile memory (e.g., RAM, which can include non-volatile RAM, magnetic RAM, ferroelectric RAM, and any other suitable forms); non-volatile memory (e.g., disk memory, FLASH memory, EPROMs, EEPROMs, non-volatile solid-state memory, etc.), unalterable memory (e.g., EPROMs), read-only memory, and/or high-capacity storage devices (e.g., hard drives, solid state drives, etc.). In some examples, the storage device 108 includes multiple kinds of memory, particularly volatile memory and non-volatile memory. The storage device 108 may also embody a computer readable media on which one or more sets of instructions are embedded. The instructions may embody one or more of the methods or logic as described herein. In a particular embodiment, the instructions may reside completely, or at least partially, within any one or more of the storage device 108, the computer readable medium, and/or within the processor 106 during execution of the instructions. In some embodiments, the storage device 108 may comprise startup criteria 164 associated with the vehicle 102, as discussed in detail below. In some embodiments, the storage device 108 may store accrued, time-stamped vehicle data or updated vehicle data (e.g., historical operating data, including, but not limited to, historical maintenance notes). The electronic control unit 104 is configured to control one or more systems or subsystems of the vehicle, including, but not limited to, a combustion system (air-fuel ratio), the ignition system 112, a heating system and/or a lighting system.

The user interface 110 is operable to receive inputs and display outputs concerning a status of the vehicle. In particular, the user interface 110 provides an interface between an operator of the vehicle 102 and the electronic control unit 104. The user interface 110 may include digital and/or analog interfaces (e.g., input devices and output devices) to receive inputs (e.g., commands) from the operator and display information concerning safety and/or operational attributes of the vehicle, as discussed in detail below. The input devices may include, for example, a control knob, buttons, a slider, an instrument panel, a digital camera for image capture and/or visual command recognition, a touch screen, an audio input device (e.g., a cabin microphone), buttons, or a touchpad. The output devices may include instrument cluster outputs (e.g., dials, lighting devices), actuators, a dashboard panel, a heads-up-display, a center console display (e.g., a liquid crystal display ("LCD"), an organic light emitting diode ("OLED") display, a flat panel display, a solid state display, or a heads-up display), and/or speakers. Additionally, the user interface 110 may include a graphic user interface (GUI) to present information and receive information from the operator of the vehicle.

The vehicle monitoring system 114 is configured to monitor, receive, and transmit vehicle data to the control system 150 via the communications network 140. For this purpose, the vehicle 102 may include a communication device 116 for sending vehicle data to the control system 150 and/or receiving commands therefrom. In some examples, the communication device 116 may embody a modem or modular telematics gateway (MTG) configured to communicate over the communications network 140, for example, via a cellular communications network. In some examples, the MTG may also be configured to support wireless communication via a satellite communication network (or channel), for example, if the communications network 140 (e.g., a cellular communications network) is unavailable. In some examples, the communication device 116 may include one or more controllers for standards-based networks (e.g., GSM, UMTS, LTE, CDMA, WiMAX, etc.), satellite communication networks, and/or wireless local area networks (e.g., WiFi^{®}, Wireless Gigabit, etc.), etc. In some examples, the communication device 116 may include controllers for personal area networks (e.g., Bluetooth^{®}, ZigBee^{®} ("IEEE 802.15.4"), Near Field Communication ("NFC"), etc.) to communicatively couple the vehicle 102 to a remote device (e.g., a smart phone, a tablet, a smart watch, etc.), a host device, or the control system 150.

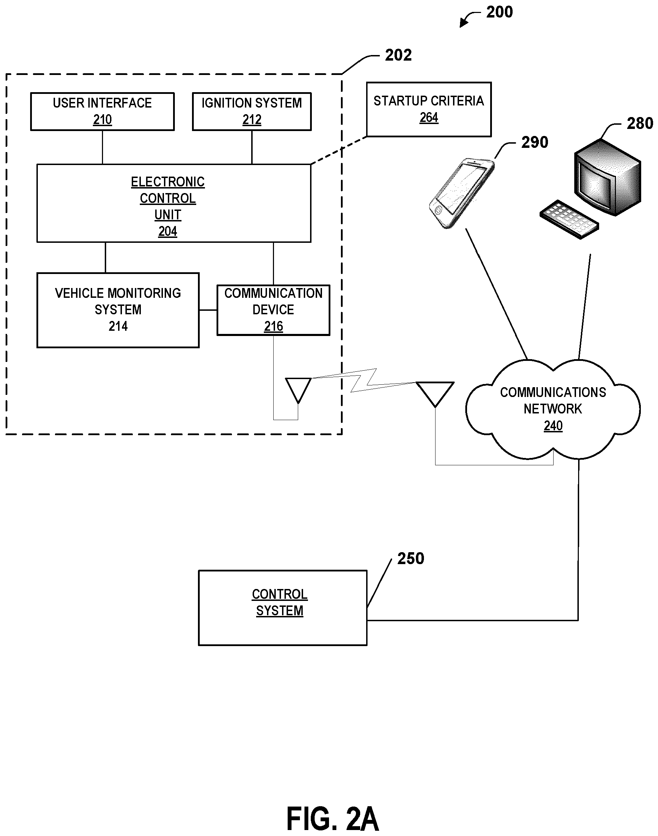

In some examples, the system 100 may comprise a communications protocol to support data packet communications consistent with the Internet Protocol (IP), to allow the vehicle 102 (or one or more remote devices or host devices (e.g., 290, 280 in FIG. 2A)) to communicate with the control system 150, for example, in embodiments wherein the control system 150 embodies a central server (e.g., an operations center).

In the illustrated example, the vehicle monitoring system 114 is configured to monitor and receive vehicle data, including, safety data and operating data. For this purpose, the vehicle monitoring system 114 may include a safety module 120 and an operating module 122. In some examples, the safety module 120 and the operating module 122 may be independently instantiated executables, each comprising an application programming interface (API) (e.g., a set of functions) that facilitate receiving vehicle data and sending the vehicle data to the control system 150.

In some examples, the safety module 120 is configured to monitor and receive data concerning safety attributes of the vehicle 102 (i.e., safety data), for example, but not limited to: a parking brake status (e.g., engaged or neutral), implement status (e.g., actuated or idle) a hydraulics status (e.g., enabled or disabled), a particulate filter status (e.g., a saturation level of a diesel particulate filter), an operator presence status, a cabin door position, and/or a service or access door/panel position. For this purpose, the safety module 120 may be operatively connected to one or more switches, sensors, or detectors. In some examples, the safety module 120 may be operatively connected to the one or more switches, sensors, or detectors via a programmable logic controller (PLC) that is in operative communication therewith. For example, the PLC of the safety module 120 may be configured to receive signals/inputs (e.g., measured current values (e.g., 4-20 mA), voltage values (e.g., 0-10VDC), capacitance values, resistance values, and the like), and convert the inputs to safety data that is communicated to the control system 150. For example, the vehicle 102 may include sensors or switches for detecting a position of a cabin door or service panel, and may embody plunger switches, limit switches, magnetic reed switches, or electromagnetic sensors. One or more proximity sensors or detectors (e.g., optical or capacitive proximity sensors, infrared detectors, cameras, switches (e.g., seat switch), etc.) may be provided to detect the presence of an operator (e.g., in the cab), or the presence of surrounding objects, persons, or animals surrounding the vehicle 102. In some examples, the safety module 120 may be operatively connected to one or more pressure sensors for detecting fluid pressures (e.g., of hydraulic fluid or oil, etc.), or a saturation level of one or more filters (e.g., via a flow rate sensor or pressure sensor).

The operating module 122 is adapted to monitor and receive data concerning operating attributes of the vehicle to be operated (i.e., operating data), including, but not limited to: a fuel level, a fluid level (e.g., transmission, hydraulic, oil, grease (e.g., for auto lube functions), and/or power steering fluid, etc.). For this purpose, the operating module 122 may be operatively connected to one or more sensors, switches, or floats, e.g., floats with magnets and Hall Effect sensors, floats with optical reflectors, optical sensors, level sensors, and the like. In some examples, the operating module 122 may be operatively connected to the one or more sensors, switches, or floats, via a programmable logic controller (PLC) that is in operative communication therewith. For example, the PLC of the operating module 122 may be configured to receive signals/inputs (e.g., measured current values (e.g., 4-20 mA), voltage values (e.g.,0-10VDC), capacitance values, resistance values, and the like), and convert the inputs to operating data that is communicated to the control system 150.

In addition, the operating module 122 may monitor, receive, and/or log other examples of operating data, for example, a battery charge level, a tire pressure level, a number of service hours or miles driven, a number of hours or miles until a next service check (e.g., an oil change), a last operation time/date, diagnostic trouble codes (e.g., retrieved from an on-board computer diagnostic system), an oil filter status, or a location of the vehicle (GPS coordinates). In some examples, the vehicle 102 may include a location determining receiver that generates coordinates of the vehicle via satellite-based systems (e.g., GLONASS, Galileo, and/or BeiDou Navigation Satellite Systems). In some examples, the operating module 122 may monitor and receive operating data such as a temperature of the fuel, oil, combustion chamber, combustion air, or a cabin temperature or hydraulic fluid temperature. For this purpose, the operating module 122 may be operatively connected to temperature sensors (e.g., existing onboard temperature sensors) to monitor and receive temperatures of fuel, oil, an engine compartment (e.g., a combustion chamber), hydraulic fluid, transmission fluid, or a cabin temperature. In any of the foregoing examples, the vehicle monitoring system 114 is configured to receive the vehicle data (e.g., safety or operating data) and transmit the vehicle data to the control system 150 via the communications network 140.

The safety module 120 and the operating module 122 are respectively configured to transmit the safety data and the operating data to the control system 150 via the communications network 140. In addition, the safety module 120 and the operating module 122 are configured to transmit the safety data and the operating data to the user-interface 110, and preferably to one or more remote devices 290 (FIG. 2A) and/or host devices 280 (FIG. 2A) communicatively coupled with the vehicle 102, as discussed in detail below. In some embodiments, the vehicle data is saved to a storage device 108 of the vehicle 102, and/or saved in the storage device 158 of the control system 150 such that the data may be logged (e.g., with a time/date stamp) and accessible at a later date and time (e.g., via a user interface 110 of the vehicle 102, or via user interfaces of a host device (e.g., 280 in FIG. 2A) and/or a remote device (e.g., 290 in FIG. 2A) communicatively coupled with the vehicle 102).

The control system 150 is configured to receive the safety data and the operating data for controlling access to start the vehicle 102. Specifically, the control system 150 may include a processor 156 and a storage device 158 for this purpose.

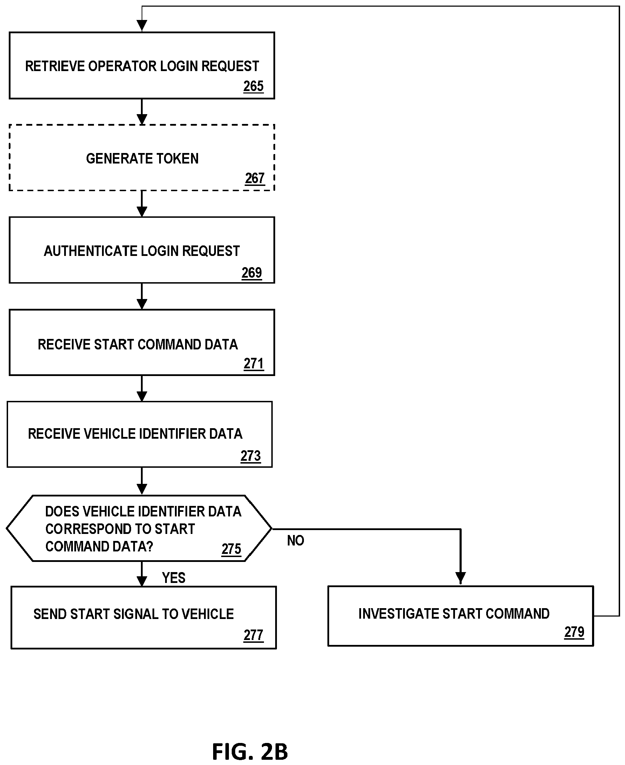

With reference to FIG. 1, the processor 156 of the control system 150 may be any suitable processing device or set of processing devices including, but not limited to: a microprocessor, a microcontroller-based platform, a suitable integrated circuit, one or more field programmable gate arrays (FPGAs), and/or one or more application-specific integrated circuits (ASICs). The storage device 158 may be volatile memory (e.g., RAM, which can include non-volatile RAM, magnetic RAM, ferroelectric RAM, and any other suitable forms); non-volatile memory (e.g., disk memory, FLASH memory, EPROMs, EEPROMs, non-volatile solid-state memory, etc.), unalterable memory (e.g., EPROMs), read-only memory, and/or high-capacity storage devices (e.g., hard drives, solid state drives, etc.). In some examples, the storage device 158 includes multiple kinds of memory, particularly volatile memory and non-volatile memory. The storage device 158 may also embody a computer readable media on which one or more sets of instructions, can be embedded. The instructions may embody one or more of the methods or logic as described herein. In a particular embodiment, the instructions may reside completely, or at least partially, within any one or more of the storage device 158, the computer readable medium, and/or within the processor 156 during execution of the instructions. In some embodiments, the control system 150 may embody a central server (e.g., an Operations Center) communicatively coupled with the vehicle 102 and to one or more remote devices or host devices (e.g., 280, 290 in FIG. 2A). The central server may comprise an application programming interface (API) (e.g., a web API) to facilitate communication between the central server, the vehicle (e.g., the communication device 116 thereof), and one or more remote or host devices (e.g., 280, 290 in FIG.2) communicatively coupled therewith. In such embodiments, the control system 150 may take the form of a cloud server adapted to receive, store, and send data and perform the various data retrieval and computing functions (e.g., comparing, generating, determining, etc.) described herein.

The control system 150 is configured to receive and compare the vehicle data relative to startup criteria 164 associated with the vehicle 102 to determine a start status thereof (e.g., ready to operate, not ready, requires maintenance, etc.) during a system check. The startup criteria 164 may reside on the storage device 108 of the vehicle's electronic control unit 104, in the form of computer readable medium that is accessible by the processor 106 to perform the various computer logic functions described herein (e.g., data analysis or comparison, determining a start or operating status, generating start/stop commands, etc.). In other embodiments, it is contemplated that the startup criteria 164 may reside on the storage device 158 of the control system 150.

The processor 156 may compare the safety data relative to startup criteria 164 comprising safety criteria 170 stipulating conditions, including, but not limited to, that the cabin door and/or service panels/doors be closed and secured, that the hydraulics be disabled, that the parking brake be engaged, that the saturation level of a particulate filter is below a maximum value. In addition, the processor 156 may compare the operating data relative to startup criteria 164 comprising operating criteria 172 stipulating conditions, including, but not limited to, that the respective fuel, transmission, power steering, grease, and/or oil levels be above minimum levels or within operating ranges, and/or that there are no diagnostic trouble codes retrieved from the vehicle's on-board diagnostic system. In some examples, the operating criteria 172 may stipulate that the tire pressures be within an operating range and/or above minimum values, that the respective oil, hydraulic fluid, transmission fluid, diesel fuel, engine compartment (e.g., combustion chamber), and cabin compartment temperatures be within corresponding operating ranges or above minimum threshold temperatures, that the vehicle is in a certain geographic location (and range associated therewith), that the battery charge is above a minimum charge level, that the service level hours are below a threshold, or that the last hours of operation predate a specific date and time.

If the vehicle data (safety data and operating data) satisfies the startup criteria (i.e., the safety criteria and operating criteria), then the control system 150 may send a start signal to the vehicle 102 (to the electronic control unit 104 thereof) indicating that the vehicle is ready to start. In some embodiments, this may include waking up the vehicle 102, for example, by powering the electronic control unit 104. In such embodiments, this may be done by a discrete signal sent from the communication device 116 to the electronic control unit 104 to power/turn on the electronic control unit 104 (e.g., by applying voltage to a wire operatively connecting the communication device 116 to the electronic control unit 104).

In some examples, the communication device 116 may communicate with the electronic control 104 during times when the vehicle is stagnant or remote (i.e., not in use), for example, absent a command to start the vehicle. In such examples, a remote device (e.g., 290 in FIG. 2A) or host device (e.g., 280 in FIG. 2A) communicatively coupled with the vehicle 102 may be operable to wake up the vehicle 102 to reprogram the electronic control unit 104 thereof (e.g., to update software or firmware), or retrieve vehicle data from the vehicle, for example, when performing a remote maintenance inspection without starting the vehicle. For instance, based on a user command, the communication device 116 may communicate with the vehicle monitoring system 114 to retrieve safety data and operating data when the vehicle is turned off, without starting the vehicle. In some embodiments, the control system 150 may comprise logic to automatically perform a daily maintenance inspection of one or more vehicles, e.g., without an operator being present. For instance, the control system 150 may communicate with the communication device 116 at a specified time each day (e.g., at 5:00 am) to retrieve operating data and/or safety data therefrom without starting the vehicle. In some embodiments, the control system 150 may compare the operating data and/or safety data to maintenance criteria to determine whether a vehicle is ready for operation (e.g., wherein the operating data and/or safety data satisfies the maintenance criteria or satisfies the startup criteria) or requires maintenance (e.g., wherein the operating data and/or safety data does not satisfy the maintenance criteria or the startup criteria). In some embodiments, the maintenance criteria may be the same as the startup criteria 164 or may include at least some (e.g., a subset) or all of the startup criteria 164. For example, in some embodiments, the maintenance criteria may require that certain fluid levels (e.g., engine oil, transmission oil, hydraulic oil, coolant, and the like) be above threshold values, or that a battery charge be above a certain percentage value, or that the vehicle is up to temperature (e.g., that the fluids are up to temperatures, or that the cabin is up to temperature). In some embodiments, the control system 150 may automatically monitor and receive the operating data and/or safety data before the machine is started (e.g., before a system check is performed when remotely starting the machine). If the control system 150 retrieves vehicle data that does not satisfy the maintenance criteria, it may send a notification to a user (e.g., via a remote device 280 and/or host device 290) indicating a potential service related issue, e.g., concerning a potential leak if a fluid level is below a threshold value, an issue with the battery, etc. In some embodiments, the notification may be sent to a display in the vehicle cabin (e.g., to a display screen, or a heads up display, etc.). In some embodiments, this may entail sending mobile alerts to an operator or fleet manager (e.g., via a host device 290) indicating that fluid levels are too low, or in some instances, too high.. In some embodiments, this may including sending a "to do" report indicating an outstanding list of maintenance items that need to accomplish (e.g., changing oil, replenishing fluids, etc.). These aspects of the present disclosure may beneficially allow a fleet operator or owner to assign another vehicle to an operator that is operational, e.g., from which vehicle data satisfies maintenance criteria.

In some embodiments, the start signal may prompt the user interface 110 of the vehicle 102 (and/or remote devices or host devices operatively connected to the vehicle 102 (discussed below)) to inform the user that the vehicle is ready to start. In such examples (and upon receiving said start signal), the electronic control unit 104 may actuate the ignition system 112 to start the vehicle 102. In some examples, upon receiving said start signal, the electronic control unit 104 may illuminate the user interface 110 (e.g., a touch screen or display thereof), unlock an interactive element (e.g., a slider or a button) of the user interface 110 (enabling an operator to start the vehicle), or actuate a module (e.g., a sealed switch module) operable by the user to control the vehicle 102, e.g., to control an ignition on/off state, to change gears, engage or disengage the parking brake, or enable or disable hydraulics. In some embodiments, the electronic control unit 104 may send a notification (e.g., via the user interface 110) prompting the operator to take control of the vehicle (e.g., via the sealed switch module) when the start signal is received, and the vehicle 102 is started. In some examples, actuating the sealed switch module upon receiving a start signal may trigger an ignition relay or switch of the ignition system 112. Yet, in other examples, actuating the sealed switch module may energize the user interface 110 (e.g., causing a touch screen or display to illuminate).

Turning now to FIG. 2A, a block diagram of another example system 200 for monitoring vehicle data and remotely starting a vehicle 202 is shown. The system 200 shares similarities of the system 100 shown in FIG. 1. Thus, a description of similar features has been omitted for brevity. In this example, the system 200 includes a host device 280 and a remote device 290 communicatively coupled with the control system 250 and to the vehicle 202 via the communications network 240.

The host device 280 may embody a desktop, a laptop, a smart phone, a smart watch, or a tablet operable by an entity, for example, a construction or farming company owner, a fleet manager, or a service entity (e.g., a service technician thereof). The host device 280 may comprise a user interface with buttons or sliders for selecting one or more fleet vehicles 202 to be started or for retrieving vehicle data therefrom. In some examples, a user of the host device 280 may decide that one or more vehicles should be ready for operation at a start time, i.e., such that a system check has been performed before the start time to determine that vehicle data satisfies startup criteria. In such embodiments, this may enable the user of the host device 280 to ensure that such vehicles are started and/or running at the start time (e.g., such that the vehicle is up to temperature), e.g., at 8 a.m. on one or more given workdays. In this manner, the host device 280 may be operable to schedule start times, prompting the control system 250 to initiate or perform a remote inspection of the vehicle 202 before the start of a work day (e.g., 15 minutes, a half hour, an hour, or two hours before 8 am). In addition, the host device 280 may display the vehicle data, including, but not limited to, any such example of vehicle data (e.g., safety data or operating data) and/or updated vehicle data described herein. In some embodiments, the host device 280 may display vehicle data and/or updated vehicle data associated with one or more different vehicles.

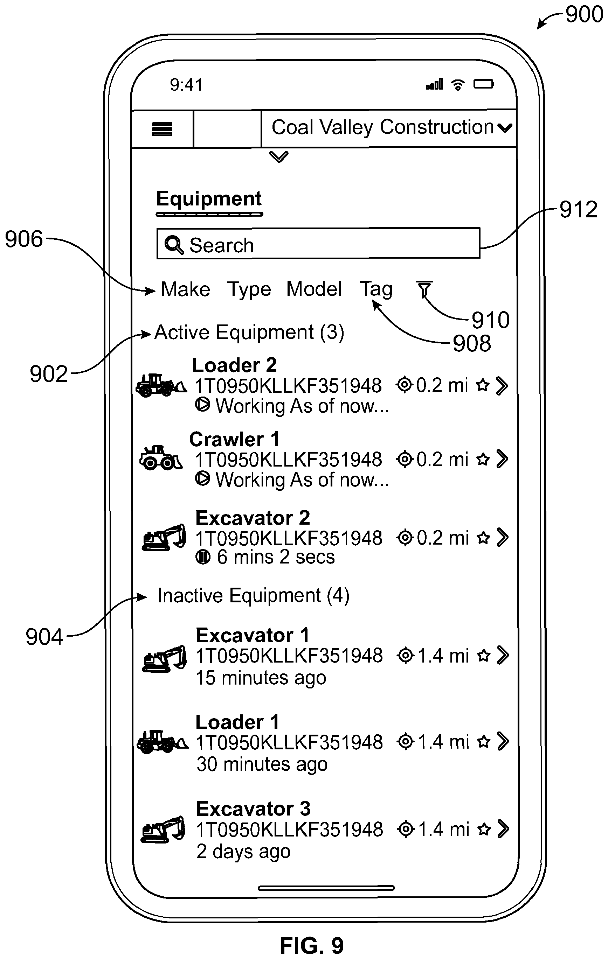

As noted above, the control system 250 receives and compares vehicle data to startup criteria to determine a start status of the vehicle 202. If the vehicle data satisfies the startup criteria, then the control system 250 may communicate the start status (e.g., ready to operate) to the host device 280 and/or to one or more remote devices 290 communicatively coupled with the control system 250 via the communications network 240. In such examples, the remote devices 290 may be operator devices (e.g., smart phones, tablets, smart watches, etc.) adapted to notify operators that certain vehicles are ready to be operated. For instance, an operator may receive a notification corresponding to the vehicle they are assigned to, e.g., corresponding to a unique identifier (e.g., VIN number) of the vehicle. In some examples, the remote device 290 may display a countdown until the vehicle is ready to be operated, e.g., a warmup period. In some examples, the control system 250 may unlock a button or slider on a user interface of the remote device 290 (e.g., via a software app), enabling the operator to remotely start the vehicle 202. In other examples, the remote device 290 may display the vehicle data and/or updated vehicle data in real time or at various times throughout a work day. In some embodiments, each remote device 290 and/or host device 280 may require the operator to authenticate themselves, via a password, or unique identifier associated with the vehicle the operator is assigned to. In some embodiments, the remote device 290 and/or host device 280 may be operable to download and access a software application (i.e., an "app") operatively connecting the remote device 290 and/or the host device 280 to the vehicle 202 (e.g., to the electronic control unit 204 thereof) and/or the control system 250. In some embodiments, the app may be hosted by the control system 250, for example, wherein the control system 250 embodies a remote, central server, e.g., a vehicle operations center. The app may define a graphical user interface (see, e.g., FIGS. 9-12D) that provides the user access to one or more input devices (e.g., a touch button, a navigation control, a gesture based control (e.g., a swipe control)), or any other suitable example of an input device described herein. The graphical user interface may also define information in real time (e.g., vehicle data, updated vehicle data, a warm up time period, time remaining until auto-shutdown, etc.). In such embodiments, it is contemplated that the warm up time period may depend on vehicle data retrieved from the vehicle and atmospheric data (e.g., atmospheric pressure, ambient temperature, etc. For instance, the control system 250 may receive vehicle data (e.g., a fluid temperature) and the ambient temperature to specify a warm up time period based on the vehicle data and the ambient temperature. In some embodiments, the specified warm up time period may be retrieved from a table (e.g., a database in the storage device 158 (FIG. 1)) comprising a plurality of different warm up time periods based on fluid temperatures and ambient temperatures. In this manner, the warm-up period may be variably adjusted based on the vehicle data and the atmospheric data.

The control system 250 may authenticate the user of the app via a unique identifier (e.g., a password, an authentication token, an encryption key, cipher text, a serial number (i.e., VIN number), fleet identifier, model number, and/or any suitable combination thereof) to verify the identity of the user logging into the app and/or initiating a command to start a vehicle, i.e., a start command. In some embodiments, this may include verifying and/or defining the user's access permission, wherein the access permission defines the type of information the user may receive from the vehicle 202 (e.g., the type of vehicle data made visible to the user via the graphical user interface of the app), and/or commands available/visible to the user via the app (e.g., commands to initiate a system check, add time to a vehicle warmup procedure (discussed below), begin a reprogramming procedure of the electronic control unit, and the like). In some embodiments, the access permission may define hierarchical security levels, wherein only certain app users (e.g., an owner of a fleet, a service entity, etc.) have access to receive certain types of information from the app concerning one or more vehicles communicatively coupled with the control system. The hierarchical security levels may also stipulate which commands are available via the app to the app user. For example, a first security level may dictate that the user may have access to start the vehicle and reprogram the vehicle, whereas a second security level may dictate that the user only has access to start the vehicle, i.e., is blocked from reprogramming the vehicle. Likewise, the security level may dictate the type of information made available to the user via the app (e.g., via the graphical user interface thereof). For example, a first security level may dictate that the user may see all available information associated with the vehicle, including vehicle data (including vehicle data in real time, historical vehicle data, etc.) productivity data (a vehicle's crop yield, utilization %), vehicle history (e.g., including purchase and/or service transactional history), wherein a second security level may only allow access to vehicle data in real time, e.g., when the vehicle is being operated, while blocking productivity data, historical vehicle data, and vehicle history. It is contemplated that a wide variety of security levels may be defined, granting or blocking access to certain commands (e.g., start command) or information made available via the app, for example, any command or information (accessible or visible via the graphical user interface of the app) disclosed in the present disclosure. In some examples, the unique identifier and/or access permission may be stored in a storage device (e.g., 158 in FIG. 1) of the control system 250, and managed by a fleet operator, owner, service provider, manager, supervisor. The unique identifier and/or access permission (e.g., security levels) may be accessible via an API of the control system 250.

Turning now to FIG. 2B, an example methodology of authenticating a user and user start command is shown. Initially, at block 265, the control system 250 (FIG. 2A) may receive an operator login request (e.g., submitted via a remote device 290 or a host device 280) to access the app. In some embodiments, at block 267, the control system 250 may generate a token and send the token to the user to authenticate the user (block 269). At block 271, the control system 250 may receive a start command from the user (e.g., via an input device on the user's remote device 290 or host device 280). In such embodiments, the start command may comprise start command data, including, but not limited, to a unique identifier (e.g., an authentication token, an encryption key, cipher text, a VIN number, a serial number, fleet identifier, model number, and/or any suitable combination thereof), access permission, operator name, operator employment status (e.g., actively employed, work schedule, and the like) to verify the identity of the user initiating the start command.

At block 273, the control system 250 may compare the start command data with vehicle identifier data associated with the vehicle 202 to which the start command was sent. The vehicle identifier data may comprise any suitable example of a unique identifier disclosed herein, e.g., a VIN number, a serial number, fleet identifier, and the like. The vehicle identifier data may also comprise any suitable example of access permission data disclosed herein. If the start command data corresponds to (i.e., matches) the vehicle identifier data (YES at block 275), the control system 250 may send a signal to the vehicle to wake up the vehicle and/or to start the vehicle (e.g., to actuate the vehicle ignition system to commence a warm up period or system check).

If the start command data does not correspond to the vehicle identifier data (NO at block 275), at block 279, the control system 250 may send a notification (e.g., a message) to investigate the start command, for example, a notification to the an app user (having access permission) to receive the notification (e.g., an owner of the fleet, fleet manager, service technician, or vehicle operation center representative) to initiate a security investigation. This may include communicating that a potential security breach has been detected, warranting further investigation.

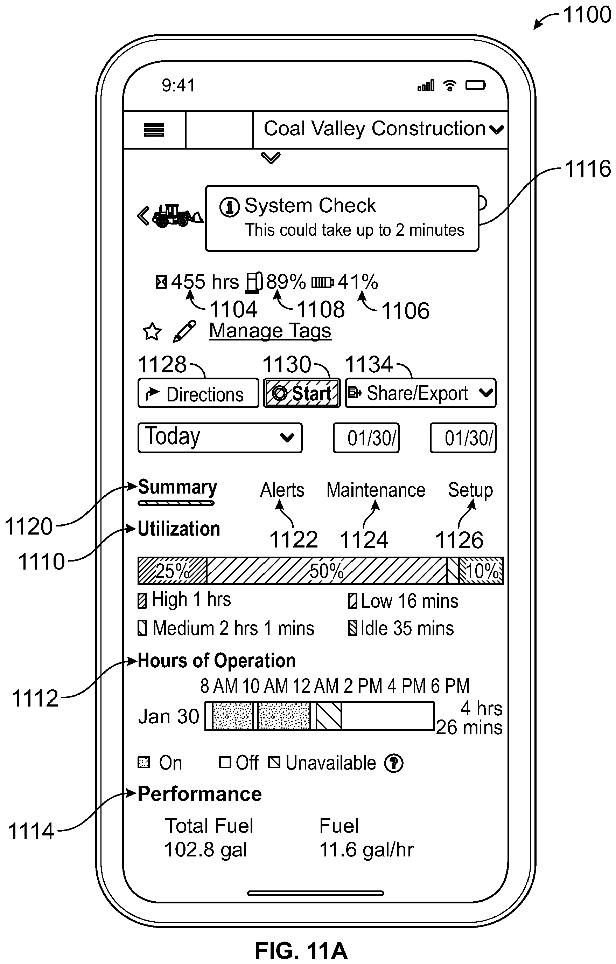

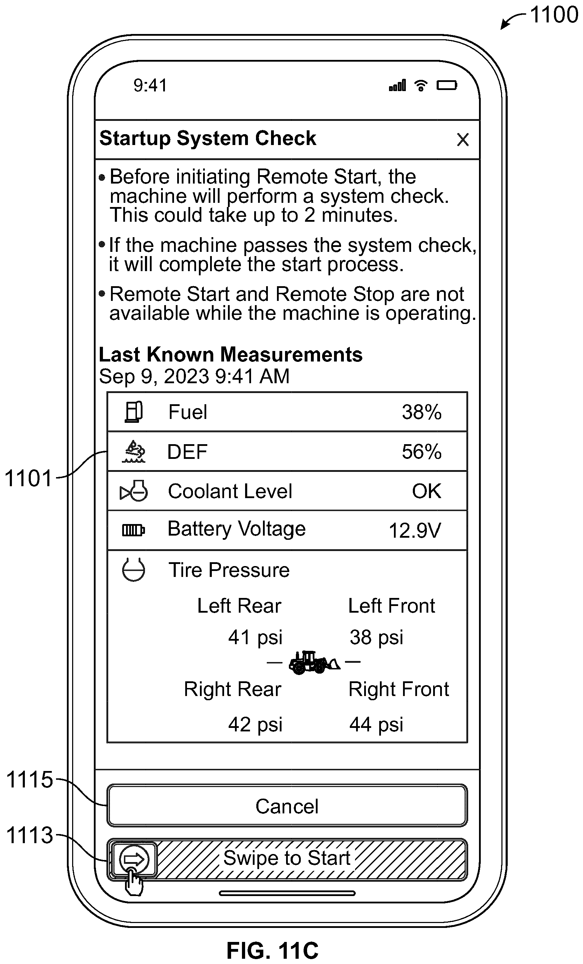

Turning back to FIG. 2A, it is contemplated the start command may be sent to the control system 250 via an input device on the remote device 290 and/or the host device 280, including, but not limited to, a gesture based control (swipe control, see, e.g., FIG. 11C), touch button (e.g., see, FIG. 11A), audio command, or any other suitable example of an input device described herein.

In some embodiments, the start command (e.g., command data) may comprise operator and/or vehicle settings that may be transmitted to the operator's respective vehicle (via the electronic control unit 104 thereof) for controlling various subsystems of the vehicle. For instance, a fleet manager may transmit vehicle settings to a respective vehicle's electronic control unit limiting the speed of a certain vehicle, or for limiting a geographical area in which the respective vehicle may operate.

When the start command is received and/or authenticated, the control system 250 may compare the vehicle data to the startup criteria. If the vehicle data does not satisfy the startup criteria, then the control system 250 may transmit data to the host device 280 and/or remote devices 290 indicating that one or more vehicles are not ready. This may be transmitted in the form of a message notification and/or an audible alarm. In some examples, a service technician may possess a host device 280 or a remote device 290 for receiving such notifications, prompting the technician to begin servicing the vehicle 202 and/or assign a technician to the vehicle (e.g., via an app). In such embodiments, it is contemplated that the user (e.g., a service technician) may receive vehicle data in the form of diagnostic trouble codes associated with a vehicle.

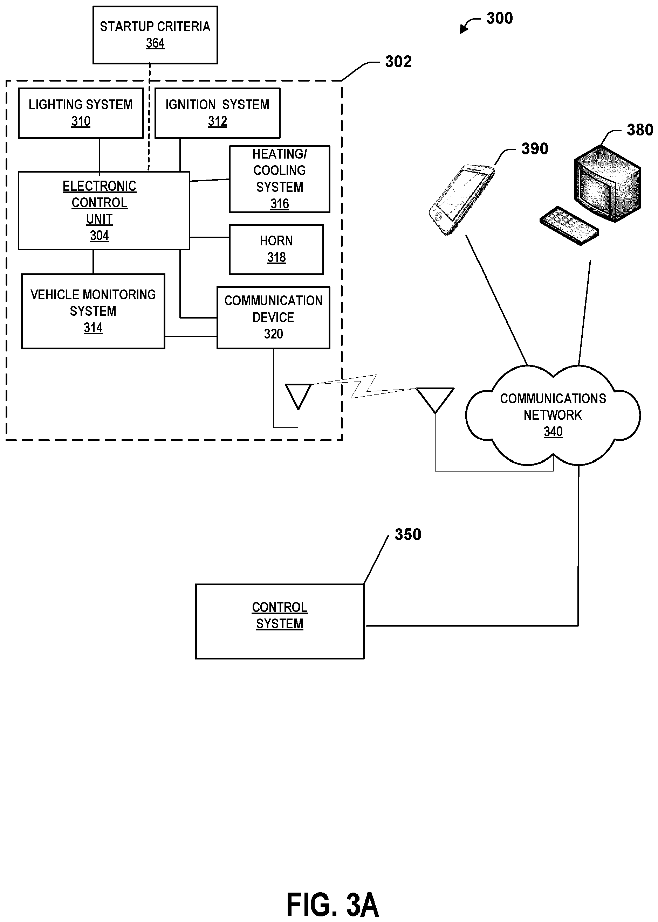

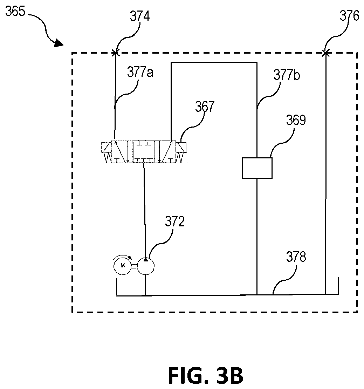

Referring to FIG. 3A, a block diagram of another example system 300 for starting a vehicle 302 is shown. The system 300 shares similarities of the systems 100 and 200 shown in FIGS. 1 and 2, respectively. Thus, a description of similar features has been omitted for brevity. In this example, the electronic control unit 304 is operatively connected to a vehicle lighting system 310, an ignition system 312, a vehicle monitoring system 314, a heating/cooling system 316, a horn 318, and a communication device 320. As noted above, the vehicle monitoring system 314 may be operatively connected to temperature sensors (e.g., existing onboard temperature sensors) to monitor and receive temperatures of fuel, oil, an engine compartment (e.g., a combustion chamber therein), hydraulic fluid, transmission fluid, or cabin temperature. The control system 350 may receive this operating data and compare it to startup criteria 364 in the same manner as above. If the operating data (i.e., temperatures) does not satisfy the startup criteria 364, then the control system 350 may send a signal to the electronic control unit 304 to perform a heating or cooling function via the heating/cooling system 316. Specifically, the heating/cooling system 316 may be configured to preheat one or more aspects of the vehicle 302, for example, diesel fuel, the combustion chamber, transmission fluid, oil, hydraulic fluid, a cabin temperature (for heating or cooling), seat warmers, and/or mirrors. For this purpose, the heating/cooling system 316 may comprise one or more of a grid heater, a supply of ether (e.g., via a valve), or a glow plug for a combustion system; an HVAC system for heating or cooling the cabin; heating elements for mirrors, seats, and a steering wheel; and/or a particulate filter regeneration system (e.g., for increasing the temperature of the filter). In some embodiments, the heating/cooling system 316 may cause the engine to rev at a higher RPM to heat fluids, e.g., oil. In other embodiments, it is contemplated that the heating/cooling system 316 may be operable to heat fluids (e.g., diesel, transmission fluid, hydraulic fluid, oil) in a different manner, for example, by pressurizing a fluid (via a pump) and directing the pressurized flow of fluid through a heating element, for example, an orifice or passageway to heat the fluid. In some embodiments, the heating/cooling system 316 may heat the fluid via other examples of heating elements, including, but not limited to, thermal fluid heaters, radiators, electric coils (e.g., ceramic electric coils) or heat exchangers (e.g., a hot plate), or any other suitable example of a heating element disclosed herein. For instance, in some embodiments, the heating/cooling system 316 may direct hydraulic fluid through a hydraulic fluid radiator or heat exchanger in communication with a coolant radiator (e.g., an antifreeze radiator) to warm up the fluid. In some embodiments, it is contemplated that a diverter valve could be utilized to direct a pressurized flow of fluid (e.g., oil) through a small passage or orifice (to heat the fluid), whereupon the heated fluid is then redirected to a tank or reservoir containing the heated fluid. For example, referring to FIG. 3B, the heating/cooling system 316 may comprise a bypass circuit 365 with a pump 372, a solenoid valve 367 (e.g., configured to shift between a plurality of positions), a first line or conduit 377a, a second line or conduit 377b, and a heating element 369. The pump 372 may be operable to direct pressurized fluid (e.g., hydraulic fluid stored in a reservoir 378) to the solenoid valve 367. It is contemplated that the solenoid valve 367 may embody a normally closed solenoid valve 367 with a plurality of positions. For example, in a first position, the solenoid valve 367 may be operable to direct the fluid to an outlet port 374 (via the first line 377a) to fluidly connect the solenoid 367 to a hydraulic cylinder operable to move (e.g., raise or lower) an implement, e.g., a bucket shovel. In the first position, it is contemplated that the fluid returning from the hydraulic cylinder may be directed back to the reservoir 378 via a return port 376.

In a second position, the solenoid valve 367 may be operable to fluidly connect the solenoid 367 to the second line 377b (e.g., a bypass line) comprising the heating element 369 to preheat the fluid, e.g., during a vehicle warmup procedure. In some embodiments, the heating element 369 may comprise a narrow tube or flow passage with an orifice (e.g., to create friction to heat the fluid via restriction between the fluid and the orifice), a thermal fluid heater, a radiator, an electric coil, or any other suitable example of a heating element or fluid heater disclosed herein. When the fluid has passed through the heating element 369, it may be returned to the reservoir 378 for subsequent use, e.g., to actuate an implement during operation.

In this manner, the solenoid valve 367 may be operable in the first position (e.g., an operating position for supplying fluid to a cylinder to actuate/move an implement) or the second position (e.g., warmup position) to preheat the fluid through the heating element 369 disposed in or on the second line 377b.

This aspect of the present disclosure is particularly beneficial to avoid requiring an operator to be present for warming fluids (e.g., hydraulic fluid), for example, by operating a hydraulic actuated implement attached to the vehicle (e.g., raising or curling a bucket, etc.) to force a flow of fluid for this purpose. This also may avoid the possibility of the implement inadvertently coming into physical contact with a person or object in the surrounding environment.

Turning back to FIG. 3A, in some examples, the vehicle monitoring system 314 may monitor and receive operating data indicating that a particulate filter has reached a saturation level requiring the filter to be cleaned, e.g., via active regeneration. In such examples, the heating/cooling system 316 may receive a command to burn off any particulate matter in the filter (e.g., a diesel particulate filter) by heating the exhaust gas to high temperatures (e.g., via active diesel particulate filter regeneration).

In some examples, the electronic control unit 304 may control the heating/cooling system 316 to perform any of the foregoing examples of heating or cooling functions before the start of the work day to maximize operator productivity. In some examples, the electronic control unit 304 may notify the operator or fleet manager when (e.g., via a countdown) the vehicle 302 will be ready to operate via a remote device 390 or the host device 380.

In some examples, the electronic control unit 304 may be operatively connected to a lighting system 310 or a horn 318, operable to send a visual or audible warning (e.g., by blinking lights, blasting the horn) to the area surrounding the vehicle 302 that the vehicle 302 will be started (e.g., to prompt persons near the vehicle 302 that the vehicle 302 is being started).

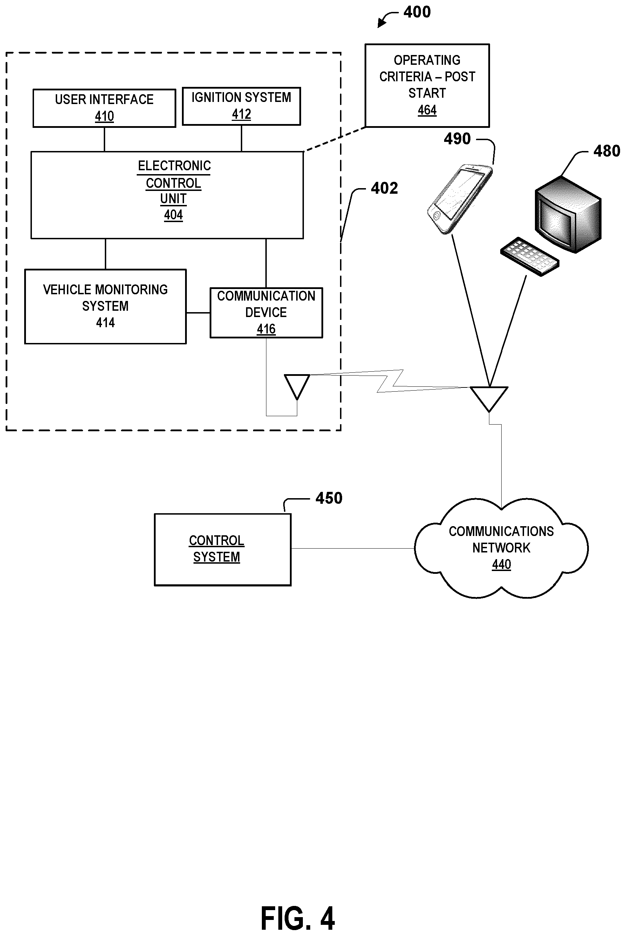

Turning to FIG. 4, another example of a system 400 for operating a vehicle 402 will now be described. As before, a description of similar features has been omitted for brevity. In this example, the vehicle monitoring system 414 is configured to receive updated vehicle data concerning operating attributes (i.e., post-start operating data) associated with the vehicle 402 after the vehicle 402 has been started, including, but not limited to: a current fuel level, a time or number of miles until the fuel will require refueling, a time until next service, a particulate filter saturation level, a current battery charge level, an alternator status, productivity data (e.g., the amount of material moved, the average weight moved per vehicle, the hours under load, etc.), current fluid levels, current tire pressures, hydraulic fluid pressure, a vehicle location, current door/access panel status, fluid temperatures (e.g., oil, fuel, hydraulic fluid, transmission fluid), diagnostic trouble codes, a current vehicle status (e.g., active/inactive), and/or an operator status (i.e., operator presence). For this purpose, the vehicle monitoring system 414 may be operatively connected to one or more on-board subsystems of the vehicle (e.g., the vehicle's diagnostic system), or to one or more switches, sensors, detectors, or floats, for example, any such example of such subsystems, switches, sensors, detectors or floats described in the present disclosure. In some embodiments, the vehicle monitoring system 414 may include an operating module (like 122 discussed above) operatively connected to one or more subsystems, switches, sensors, floats, or detectors.

The control system 450 may receive the updated vehicle data and transmit and display the updated vehicle data to the user interface 410 of the vehicle and/or the user interfaces of one or more of the remote and/or host devices 490 and 480 in real time. In some embodiments, the control system 450 may determine a post-start operating status of the vehicle 402 based on the updated vehicle data. Specifically, the control system 450 may compare the updated vehicle data relative to post-start operating criteria 464 concerning attributes of the vehicle after the vehicle 402 has been started. The post-start operating criteria 464 may stipulate conditions that the operator is present and seated in the vehicle 402, that the particulate saturation level be below a certain level, or that the vehicle 402 be within a certain geographic location (and range associated with said location) designated by a fleet manager or owner via a host device 480. If the updated vehicle data does not satisfy the post-start operating criteria, the control system 450 may send a signal to the electronic control unit 404 to disable power to the vehicle 402, e.g., via the ignition system 412.

In some examples, the electronic control unit 404 may perform an automatic shutdown of the vehicle 402 to conserve fuel, and notify a host device 480 and/or a remote device 490 of the shutdown (e.g., via a countdown displayed on the user interface 410 of the vehicle, or on user interfaces of the host device 480 and/or the remote device 490). In some embodiments, the machine may perform an automatic shutdown after a predetermined period of time has elapsed, e.g., after a specified period of undetected operator presence, a specified period prescribed by the user (via the host device 480 or the remote device 490), or a specified period of vehicle or implement inactivity. In some embodiments, the specified time period may be adjusted by the user (e.g., via a graphical user interface of an app), as discussed in detail below. In some examples, the specified time period could be a time period somewhere between about 5 minutes and 3 hours, for example, about 10 minutes, 15 minutes, 20 minutes, 30 minutes, 45 minutes, an hour, or two hours. In some embodiments, the specified time period (e.g., submitted or altered via the remote device 490 or the host device 480) could be constrained by a maximum value, for example, about two hours, three hours, or four hours. In some examples, the specified time period may coincide with the time period for a warmup procedure to warm up the vehicle, as discussed in detail below.

In some examples, the post-start operating criteria 464 may include operating criteria relevant to starting the vehicle, for example, conditions that the fluid levels (e.g., hydraulic, transmission, oil, grease, power steering) be above respective minimum levels, or that the tire pressures be above respective minimum values, or that the temperatures of the respective fluids (oil, hydraulic, fuel, transmission, diesel exhaust fluid, etc.) or cabin temperature be within ranges and/or above or below predetermined values. In some embodiments, the post-start operating criteria 464 may stipulate that the number of service hours be below a maximum value (hours per day), or that there are no diagnostic trouble codes associated with the vehicle. As noted above, if the updated vehicle data does not satisfy the post-start operating criteria, the control system 450 may send a signal to the electronic control unit 404 to disable power to the vehicle 402, e.g., via the ignition system 412. In some embodiments, the control system 450 may prompt a technician to begin servicing the vehicle if, for example, the updated vehicle data comprises a diagnostic trouble code.

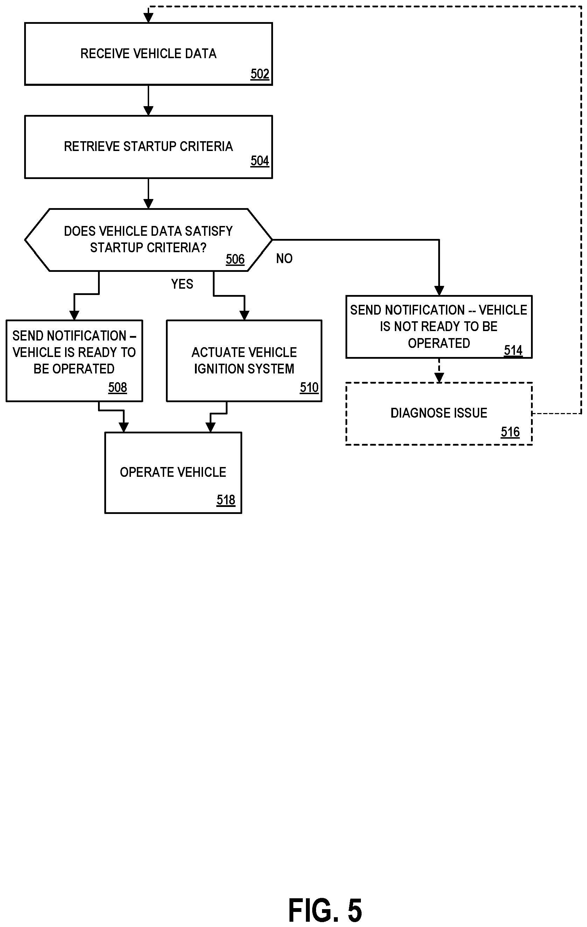

FIG. 5 is an example flowchart of a method to start a vehicle 202 (FIG. 2A). Initially, the control system 250 receives vehicle data, including safety data and operating data (block 502). The control system 250 may receive the vehicle data from the vehicle monitoring system 214 via a communications network 240. The control system 250 retrieves startup criteria 264, including safety criteria and operating criteria (block 504). The control system 250 compares the vehicle data relative to the startup criteria to determine a start status. In particular, the control system determines whether the vehicle data satisfies the startup criteria (block 506). If the vehicle data satisfies the startup criteria (YES at block 506), the control system 250 sends a notification to the electronic control unit 204, the host device 280, and/or the remote device 290 indicating that the vehicle is ready to operate (block 508). This notification may entail transmitting a countdown (e.g., a time) indicating when the vehicle will be ready to operate, e.g., after fulfilling a system check or warmup period. Satisfying the startup criteria (YES at block 506) may also cause the electronic control unit 204 to actuate the vehicle ignition system 212 (block 510). In some examples, the control system 250 may enable one or more remote devices 290 to actuate the vehicle ignition system 212, i.e., to remotely start the vehicle. Yet, in some examples, the operator be required to be in the vehicle (based on startup criteria stipulating the same) in order to actuate the ignition system 212 to start the vehicle. When the vehicle is started, and the operator is in the cabin, the operator may operate the vehicle (block 518).

If the vehicle data does not satisfy the startup criteria (NO at block 506), the control system 250 sends a notification to the remote device 290 and/or the host device 280 indicating that the vehicle did not pass inspection, and is not ready to operate (block 514). In some examples, this may also prompt one or more users to diagnose the issue (block 516). For instance, this may notify a service technician (having access to a remote device 290) of the issue (e.g., via trouble codes), prompting the technician remedy the issue (remotely or in person). When the issue has been remedied, the host device 280 may be operable to move the vehicle 202 into an available queue of vehicles, whereupon the control system 250 will again receive vehicle data (block 502) before starting the vehicle. In some embodiments, the control system 250 may send a notification to the remote device 290 and/or host device 280 indicating the specific type of vehicle data (e.g., operating data) that did not satisfy the startup criteria. For instance, the vehicle data may indicate that a fluid level is below a threshold value required for vehicle or implement operation. If below the threshold, the control system 250 may send a notification to the remote device 290 and/or the host device 280 regarding a potential leak before the vehicle is started, warranting further investigation (e.g., requiring a service technician).

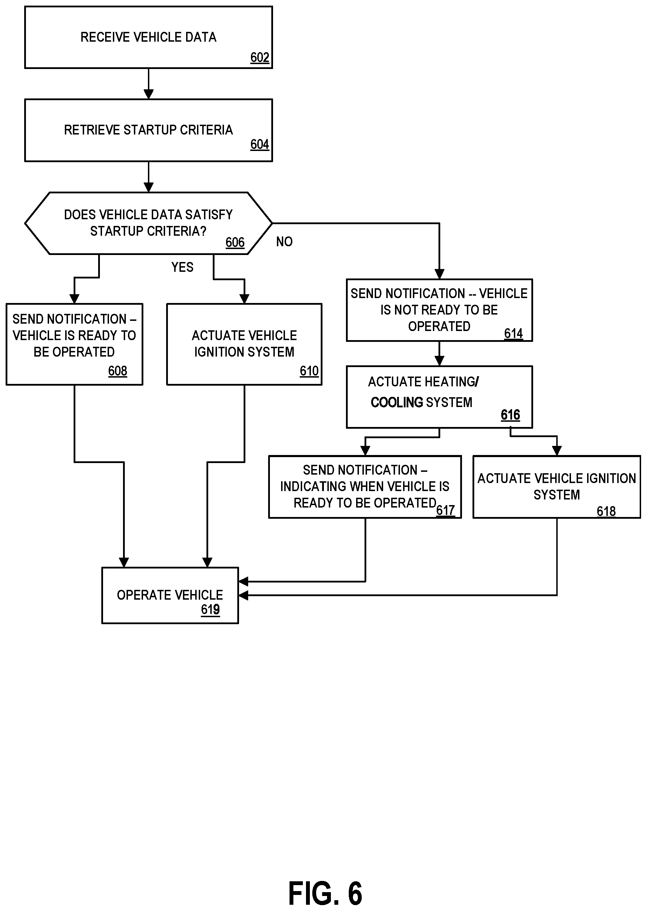

FIG. 6 is another example flowchart of a method to start a vehicle (e.g., 302 in FIG. 3A). Initially, the control system 250 receives vehicle data, including safety data and operating data (block 602). The control system 250 may receive the vehicle data from the vehicle monitoring system 214 via a communications network 240. The control system 250 retrieves startup criteria 264, including safety criteria and operating criteria (block 604). The control system 250 compares the vehicle data relative to the startup criteria to determine a start status. In particular, the control system determines whether the vehicle data satisfies the startup criteria (block 606). In this example, if the vehicle data does not satisfy the startup criteria (block 606), the control system 250 will send a notification indicating that the vehicle is not ready (block 614). This may arise based on vehicle data (e.g., operating data) indicating that the one or more temperatures (e.g., of diesel fuel, the combustion chamber, the cabin, and/or any of the fluids, e.g., hydraulic fluid, transmission fluid, etc.) are outside an acceptable range to start the vehicle, e.g., below or above a threshold value. In such embodiments, this may cause the electronic control unit 304 to actuate the heating/cooling system 316 (block 616) to preheat one or more aspects of the vehicle (e.g., diesel fuel, the combustion chamber, transmission or hydraulic fluids, cabin, mirrors, seat warmers, etc.), or in certain circumstances, cool the cabin. In some examples, this may cause the electronic control unit 304 to warm fluids via a bypass circuit (e.g., 365 in FIG. 3B). Concurrently or thereafter, the control system 350 may send a notification (block 617) indicating when the vehicle will be ready to be operated by the user, e.g., via a countdown. In some examples, the electronic control unit 304 may actuate the vehicle ignition system (block 618) concurrently, before, or after sending the foregoing notification, or before the vehicle is operated (block 619). If the vehicle data satisfies the startup criteria (YES at block 606), the control system 250 sends a notification to the electronic control unit 204, the host device 280, and/or the remote device 290 indicating that the vehicle is ready to operate (block 608). This notification may entail transmitting a countdown (e.g., a time) indicating when the vehicle will be ready to operate, e.g., after fulfilling a system check or warmup period. Satisfying the startup criteria (YES at block 606) may also cause the electronic control unit 204 to actuate the vehicle ignition system 212 (block 610). In some examples, the control system 250 may enable one or more remote devices 290 to actuate the vehicle ignition system 212, i.e., to remotely start the vehicle.

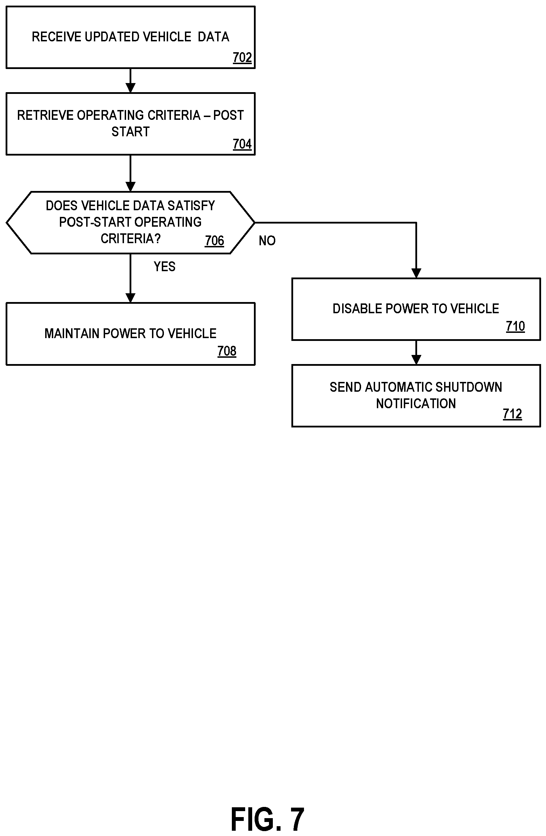

FIG. 7 is an example flowchart of a method of operating the vehicle 402 (FIG. 4). Initially, the control system receives updated vehicle data (block 702) after the vehicle 402 is started. The control system 450 may receive the updated vehicle data from the vehicle monitoring system 414 via a communications network 440. At block 704, the control system 450 retrieves post-start operating criteria 464 (i.e., a second set of operating criteria) pertaining to post-start conditions of the vehicle 402. The control system 450 compares the updated vehicle data relative to the post-start operating criteria to determine an operating status. In particular, the control system determines whether the updated vehicle data satisfies the post-start operating criteria (block 706). If the updated vehicle data satisfies the post-start operating criteria (YES at block 706), the control system 450 (via the electronic control unit 404) will maintain power to the vehicle 402 (block 708). If the updated vehicle data does not satisfy the post-start operating criteria (NO at block 706), the control system 450 (via the electronic control unit 404) will disable power to the vehicle 402 (block 710) and disable the ignition system 412. This may occur, for example, if updated vehicle data indicates that one of the doors or service panels are open, or if the operator is no longer detected in the cab (via any example of a sensor, detector, or switch as described herein). This also may occur if, for example, the updated vehicle data indicates a diagnostic trouble code, an abnormal temperature condition (e.g., indicative of a fire), or an abnormality in the engine or hydraulic system (oil or hydraulic pressure outside a normal range as measured via one or more pressure sensors).

In such examples, the control system 450 may automatically send a notification to the remote device 490, to the host device 480, or the user-interface 410 of the vehicle 402 indicating that vehicle is being disabled based on an abnormality (712). This also may entail transmitting a countdown until the vehicle will be disabled.

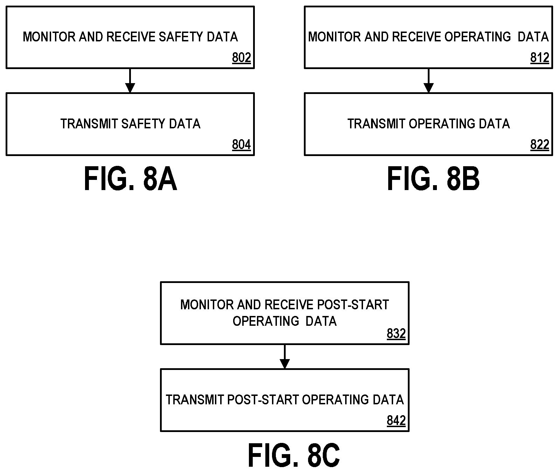

FIG. 8A is an example flow chart of a method of monitoring, receiving, and transmitting safety data via the safety module 120 shown in FIG. 1. At step 802, the safety module 120 monitors and receives data concerning safety attributes of the vehicle 102 (i.e., safety data). The monitoring may be carried out via one or more monitoring devices (i.e., switches, sensors, or detectors), including, but not limited to, any such example of switches, sensors, or detectors described herein. Further still, the safety module 120 may receive the safety data in the form output signals (e.g., electrical, voltage, etc.) sent from the monitoring devices. At step 804, the safety module 120 transmits the safety data to the control system 150 via the communications network 140.

FIG. 8B is an example flow chart of a method of monitoring, receiving, and transmitting operating data via the operating module 122 shown in FIG. 1. At step 812, the operating module 122 monitors and receives data concerning operating attributes of the vehicle 102 (i.e., operating data). The monitoring may be carried out via one or more monitoring devices (i.e., switches, sensors, or floats), including, but not limited to, any such example of switches, sensors, or floats described herein. Further still, the operating module 122 may receive the operating data in the form output signals (e.g., electrical, voltage, etc.) sent from the monitoring devices. At step 822, the operating module 122 transmits the operating data to the control system 150 via the communications network 140. FIG. 8C is an example flow chart of a method of monitoring and receiving post-start operating data via the vehicle monitoring system 414 shown in FIG. 4. At step 832, the vehicle monitoring system 414 (e.g., an operating module thereof) monitors and receives data concerning post-start operating attributes of the vehicle 402 (i.e., post-start operating data). This may be done in the same manner as discussed above for monitoring and receiving operating data (re: FIG. 8B). At step 842, the vehicle monitoring system 414 transmits the post-start operating data to the control system 450 via a communications network 440.

Turning now to FIGS. 9-12D, various examples of graphical user interfaces employed in connection with the remote and/or host devices 290, 390, 490, and 280, 380, and 480 will now be described. In the illustrated examples, the remote and/or host devices embody smart phones (e.g., with apps).

Turning to FIG. 9, an exemplary user interface 900 of a remote device 290, 390, 490 and/or host device 280, 380, 480 may display a list 902 of active equipment or vehicles (e.g., construction vehicles) and a list 904 of inactive equipment or vehicles owned or operated by a fleet or company (e.g., Coal Valley Construction). In some embodiments, the lists 902, 904 may include operating data (retrieved via the vehicle monitoring system) indicating a location of the vehicle (e.g., .2 miles from a central location), or operating data indicating the last time the vehicle was operated (e.g., Excavator 1 last operated 15 minutes ago). It is also contemplated that the list may include operating data indicating that one or more vehicles are being serviced, that one or more vehicles are ready to be operated (e.g., upon performing a system check), the name or ID of an operator associated with the vehicle, or the number of operating hours remaining before a vehicle service. As shown, the user interface 900 may also include one or more input devices 906 (e.g., interactive elements such as buttons), or other suitable examples of input devices discussed herein. The input devices 906 may be operable to, for example, select a specific make, type, or model of a vehicle. The input devices may also include a filter button 910, for refining search results (e.g., based on vehicle, make, type, or model). Additionally, the input devices 906 may include a tag button 908, operable to assign (e.g., tag) vehicles to certain groups or categories. For instance, a user may desire to assign one or more vehicles to a group entitled, "Favorite Harvest Group." In this manner, the user can use the filter button 910 to refine the listing to include one or more groups desired by the user.

Additionally, the user interface 900 may include a search bar 912, operable to submit queries regarding vehicles, including, but not limited to, the type of vehicles, vehicle data and/or updated vehicle data associated with the vehicle. Furthermore, the user interface 900 may be operable to select one or more vehicles from the list for retrieving vehicle data or updated vehicle data from said vehicles, e.g., by scrolling over and clicking on a vehicle for further detail. In some embodiments, the user interface 900 may include a button to institute a system check when it is desired to start a vehicle, perform a remote maintenance inspection, and/or select one or more vehicles the user (e.g., fleet manager, owner, or technician) desires to operate/start, or stop, as discussed in detail below.

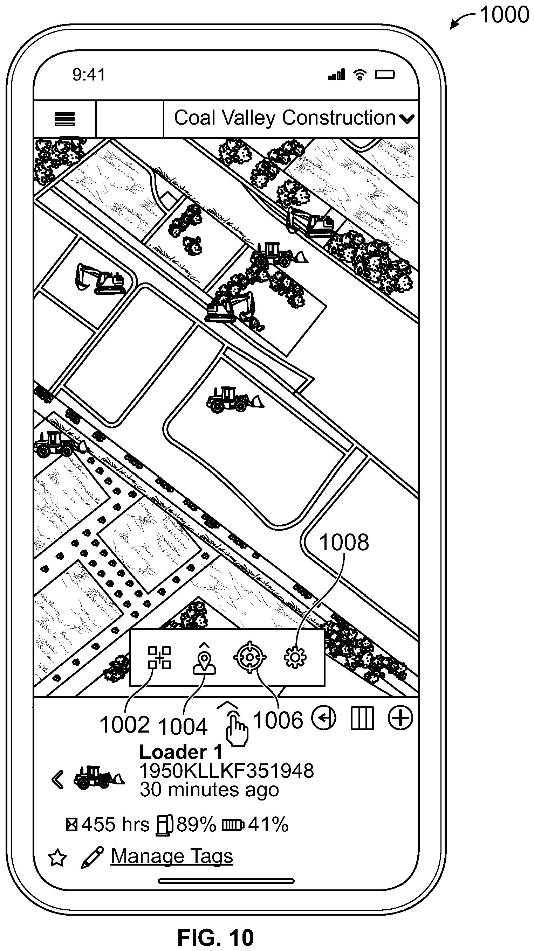

Turning to FIG. 10, an example of another graphical user interface 1000 is shown. In this embodiment, the user interface 1000 graphically displays a map of where one or more vehicles are geographically located. As shown, the user interface 1000 may include a zoom button 1002 operable to zoom in or out, a background button 1004 operable to change the background between a satellite view and a computer generated map view. In some embodiments, it is contemplated that the zooming functionality may be done via a mouse wheel, for example, in such embodiments wherein the remote device or host device is a laptop or a desktop with a mouse.

In addition, the user interface 1000 may include a current location button 1006, operable to retrieve and display a current location of the vehicle selected (e.g., Loader 1 in the illustrated example). Further still, the user interface 1000 may include a settings button 1008, operable to display or turn off various elements of the map, including, but not limited to, a location history, alerts, equipment status, and/or any other examples of vehicle data and/or updated vehicle data described herein.

In some embodiments, the vehicle location may be provided in the form of operating data from the vehicle monitoring system (e.g., retrieved via a location determining receiver). The map may also plot the vehicle (e.g., Loader 1 in the illustrated example) relative to other fleet vehicles. The user interface 1000 may be operable to select the desired vehicle (via a touch screen, cursor, or any other suitable interactive element) to retrieve and display additional information associated with the vehicle, for example, vehicle data and/or updated vehicle data. For example, the user interface 1000 may display operating data, such as the number of service hours (e.g., 455) associated with the vehicle, a fuel level (e.g., 89% as shown), a diesel emission fluid level (e.g., 41% as shown) a diesel particulate filter saturation level, a vehicle VIN number, a time when the vehicle was last located or operational, a location of the vehicle at a specific time, and/or any other examples of vehicle data and updated vehicle data described herein.

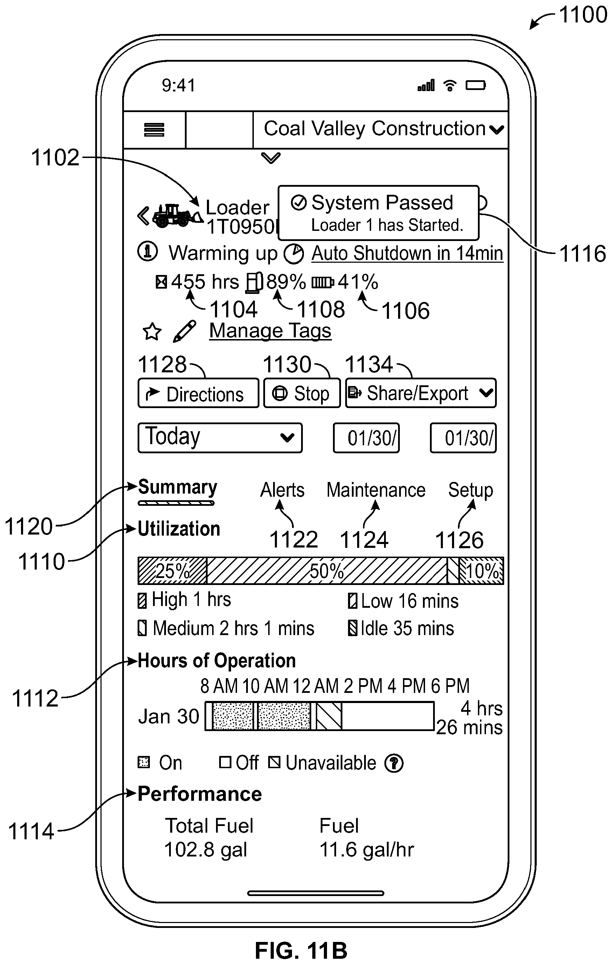

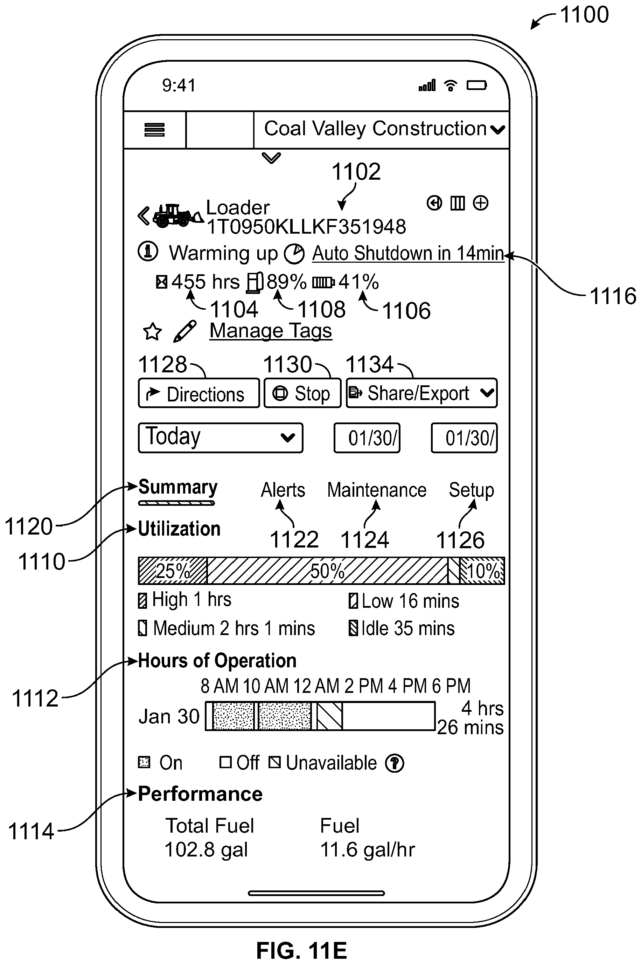

Turning now to FIGS. 11A - 11F, examples of another graphical user interface 1100 are shown. In this embodiment, the user interface 1100 is operable to display vehicle data and/or updated vehicle data associated with a vehicle that has been selected by the user (e.g., a loader in the example shown). For example, the user interface 1100 may display vehicle data, including the corresponding VIN 1102 (FIGS. 11B and 11E) of the vehicle, the last time the vehicle was operated, a total number of service hours 1104, a diesel emission fluid level 1106 and/or a diesel particulate filter saturation status/level, and/or a current fuel level 1108. It should be understood that the user interface 1100 may display other types of vehicle data (or updated vehicle data), for instance, any other such examples described in the present disclosure.

In the illustrated embodiment, the user interface 1100 also displays a summary of performance-related operating data, including, but not limited to, utilization data 1110 (depicting a utilization % of the vehicle), hours of vehicle operation 1112 (graphically displayed and shaded relative to a daily schedule, e.g., as on, off, or unavailable), and fuel performance data 1114 (e.g., fuel economy, total fuel consumed). In the illustrated example, the utilization data is presented as a percentage in a data bar, discerning utilization as categorically idle, low, medium, or high. It is contemplated that the utilization percentage may be displayed in different forms (e.g., a bar graph, a pie chart, and the like) without departing from the scope of the present disclosure.

The user interface 1100 may also display relevant notifications or alerts 1116 (e.g., (e.g., popup notifications, tooltips, etc.). For example, the notifications or alerts 1116 may communicate updates in real time regarding vehicle data or updated vehicle data, for example, safety data (any suitable example disclosed herein), operating data or updated operating data (any suitable example disclosed herein), a start status based on a user start command to start the vehicle (e.g., System "Passed" or "Failed" system check), that the vehicle will begin an automatic shutdown (e.g., due to updated vehicle data not satisfying post-start operating criteria or vehicle and/or implement inactivity). The user interface 1100 may also display maintenance notes, e.g., the time until the next service, the last service date, other notes (e.g., tasks to be done), or information concerning the setup of the vehicle (e.g., the type of implement attached thereto, or any restrictions or limits prescribed by the operator (e.g., via a host device), such as vehicle speed restrictions, geographical limit restrictions, or startup restrictions (limiting the number of startup attempts).

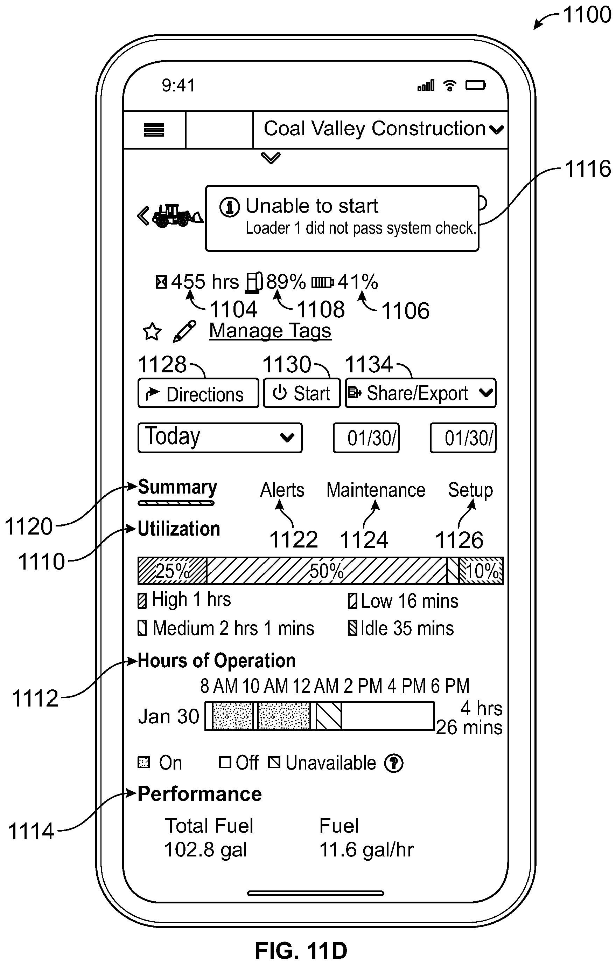

The summary, alerts, maintenance, and setup information may be retrieved by navigating/hovering over and selecting (e.g., tapping, clicking on) the respective heading in the form of a touch screen button (e.g., a "Summary" heading or button 1120, an "Alerts" heading or button 1122, a "Maintenance" heading or button 1124, and a "Setup" heading or button 1126). The user interface 1100 may also include a directions touch screen button 1128, operable to retrieve directions (e.g., to a work site). As shown in FIG. 11A, the user interface 1100 may include a start/stop touch button 1130 (FIGS. 11A, 11B, 11D-11F) to retrieve operating data from the vehicle, for example, the last known measurements (see, e.g., FIG. 11C) when performing a remote maintenance inspection. In some embodiments, the start/stop touch button 1130 may be operable to wake up the vehicle for retrieving current vehicle data, e.g., updated measurements of fuel, DEF, coolant, battery voltage, tire pressures, or any other suitable example of vehicle data disclosed herein. In some embodiments, selecting the start/stop touch button 1130 may cause the control system 250 to send a signal to wake up the vehicle, e.g., via the vehicle's communication device 116, as discussed above.

Referring to FIG. 11C, the user interface 1100 may include another button or slider 1113 (FIG. 11C), operable to transmit a start command to the control system 150, 250, 350, 450 when it is desired to start a vehicle. For example, moving the slider 1113 to the right (labeled as "Swipe to Start" in the example shown) may cause the remote device 290, 390, 490 or host device 280, 380, 480 to send a start command to the control system 150, 250, 350, 450 indicating that the associated user desires to start a vehicle, prompting the control system 150, 250, 350, 450 to perform a system check. If the system check is successful (i.e., vehicle data satisfies startup criteria), the control system 150, 250, 350, 450 may actuate the vehicle ignition system to start the vehicle, or in some embodiments, immediately start the vehicle. As shown in FIG. 11B, the user interface 1100 may display a notification 1116 indicating that the vehicle has started, and that the system passed the system check. In some embodiments, a user may desire to cancel a start command to start the vehicle. For this purpose, the user interface 1100 may include a cancel slider or button 1115.

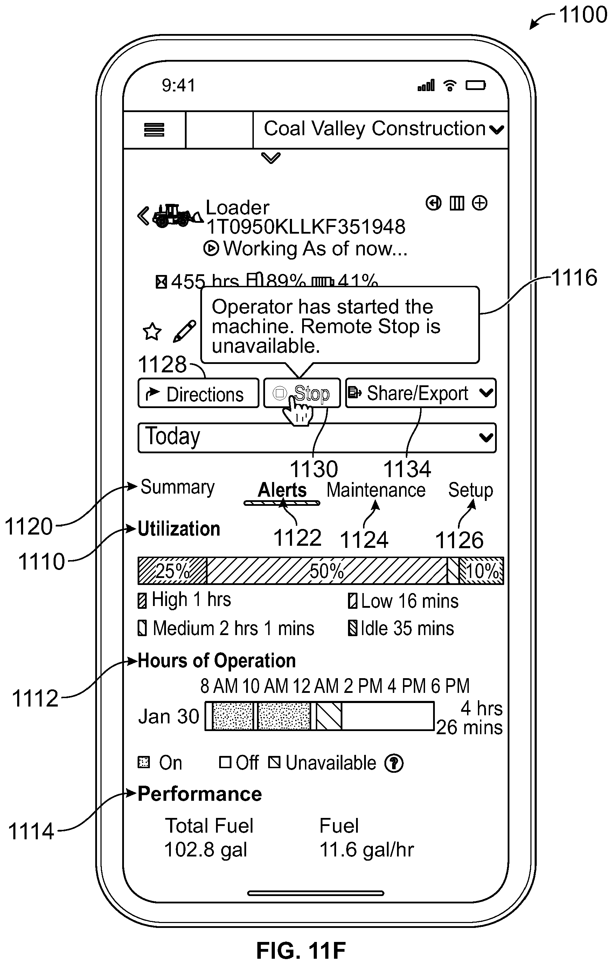

In some embodiments, the start/stop touch button 1130 may be operable to turn off the vehicle. For example, referring to FIG. 11B, the start/stop touch button 1130 may be operable to terminate the start command, or to turn off the vehicle after it has started. In some embodiments, the start/stop touch button 1130 may not be accessible or operable to turn off the vehicle remotely, for example, based on criteria set forth by the vehicle owner or fleet operator, e.g., entered via a host device. In some embodiments, it is contemplated that the start/stop touch button 1130 may be operable to send a start command to start the vehicle, prompting the control system 150, 250, 350, 450 to perform a system check and determine a start status of the vehicle. In some embodiments, the start/stop touch button 1130 may be grayed out or shaded (as shown in FIG. 11A) or otherwise inoperable during a system check. In some embodiments, the user interface 1100 may convey a notification or alert 1116 (see, e.g., FIG. 11A--via a prompt or popup as shown) that a system check is being performed (i.e., to determine a start status). If the system check indicates that the vehicle data satisfies the startup criteria, then the user interface 1100 may make the start/stop button 1130 inoperable by illustrating it differently (e.g., via a different color) or making it invisible or otherwise inaccessible to the user. In some embodiments, the user interface 1100 may display a notification or alert 1116 (FIG. 11B) that the vehicle has passed a system check (via a prompt or popup as shown), or that a vehicle has been started (FIG. 11F).

In some examples, the start/stop button 1130 may be replaced by a slider (e.g., 1132) to perform a maintenance inspection, and/or to start the vehicle.

In some embodiments, the start/stop button 1130 may be operable to cancel a remote maintenance inspection. In this manner, it should be understood that a wide variety of user interface arrangements fall within the scope of the present disclosure.

In some embodiments, it is contemplated that a user interface of a remote device 290, 390, 490 may display less information relative to the information displayed by a user interface of a host device 280, 380, 480. For example, a fleet manager, owner, or technician may desire that an operator not see certain types of vehicle data (e.g., utilization %, setup data, maintenance notes, etc.). In some examples, the type of information displayed via the user interface may be determined by the user's access permission (discussed above). In some examples, the user interface 1100 may include a share export button 1134 to allow the user to share or export information, for instance, vehicle data or updated vehicle data (time logged) for further investigation, or when it is desired to share such data to another party (e.g., a service technician, a product development team, etc.).

Referring to FIG. 11D, in some examples, the user interface 1100 may display a notification or alert 1116 (e.g., a prompt or popup as shown) indicating that the vehicle is unable to start. This may occur, for example, if the control system 150, 250, 350, 450 determines that the vehicle data does not satisfy the startup criteria during a system check. In some embodiments, the user interface 1100 may also display information indicating why the vehicle did not pass the system check, for example, information indicating that the cabin door is open, or that the hydraulics are engaged. Referring to FIG. 11E, in some embodiments, the user interface 1100 may display a notification or alert 1116 indicating that a vehicle will be shutdown (e.g., an automatic shutdown), for instance, if the updated vehicle data does not satisfy post-start operating criteria (e.g., if a cabin door becomes open, or the presence of an operator is no longer detected).

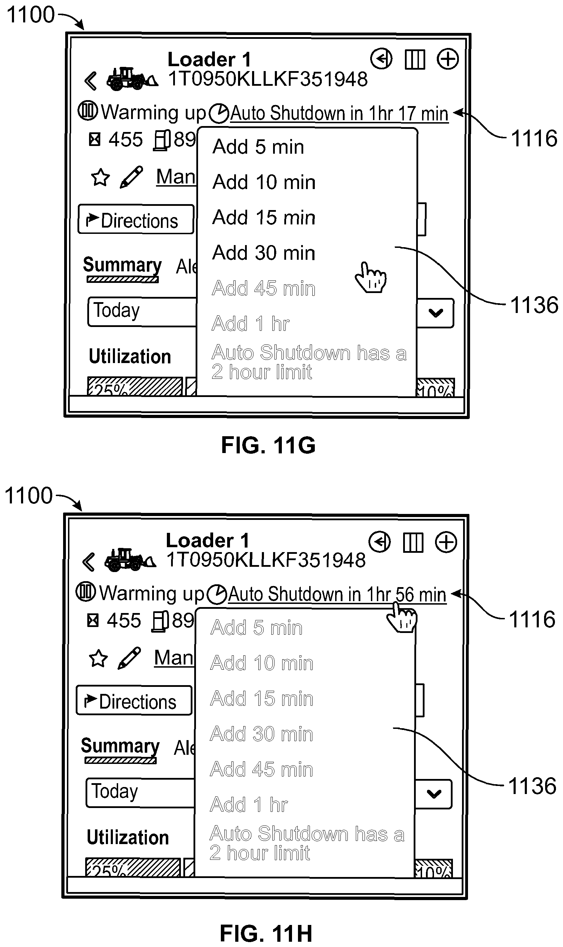

Turning to FIG. 11G and 11H, the automatic shutdown notification or alert 1116 may be operable as a touch button that, when clicked or otherwise selected, will display a drop down menu 1136 of time options, that may be added to extend the automatic shutdown time period, for example, between a period between about five minutes and two hours. This aspect of the present disclosure is beneficial insofar as it allows the user (e.g., an operator who has started the vehicle) to extend the automatic shutdown period if, for example, the operator is running late or has been required to attend to other matters that would otherwise undesirably cause the vehicle to shutdown (e.g., requiring a subsequent start up). In the embodiment of FIG. 11G, the automatic shutdown time extension options are limited to 5, 10, 15, and 30 minutes, because a time period of 45 minutes or an hour (grayed out in the embodiment shown) would exceed a two hour limit. As shown in FIG. 11H, none of the automatic shut down time extension options are accessible, as any one of them would exceed a two hour limit based on the current automatic shutdown time of one hour and fifty-six minutes. As noted above, the automatic shutdown time may have a limit (i.e., upper limit/maximum value), e.g., two hours in the embodiment shown. In the embodiment shown, the unavailable/inaccessible time options are grayed out. It is contemplated that such time out options may not be visible. In any of the foregoing examples, the automatic shutdown time may correspond to a warm-up period of the vehicle, for example, after a user has initiated a system check. Although, it is contemplated that the automatic shutdown period may be a separate time period, for example, that is initiated when updated vehicle data does not satisfy post start operating criteria, or when the vehicle monitoring system 114, 214, 314, 414 detects vehicle and/or implement inactivity, e.g., after a specified time period of vehicle and/or implement inactivity.

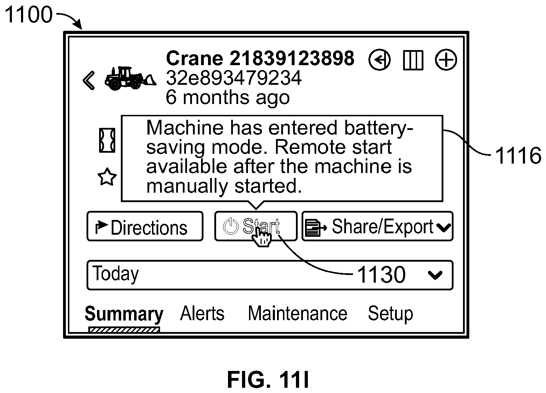

Turning to FIG. 11I, the user interface 1100 may disable the start/stop button 1130 (FIG. 11B) and/or slider 1132 (FIG. 11C) if, for example, the associated vehicle has entered a hibernation mode. As disclosed herein, hibernation mode relates to a specified time period of vehicle inactivity (e.g., 30 days of vehicle inactivity), whereupon remotely starting the vehicle (e.g., via a remote device 290, 390, 490 or host device 280, 380, 480) will not be possible. This aspect of the present disclosure is beneficial insofar as it helps preserve the battery life of the vehicle (e.g., to preclude unnecessarily supplying power to the vehicle's communication device (e.g., 216 in FIG. 2).

In such embodiments, the start/stop button 1130 or slider 1132 may be inoperable (e.g., by being grayed out or no longer visible via the user interface 1100), and the vehicle's communication device (e.g., 116 in FIG. 1) may be turned off, to preclude wireless communication therewith via the remote device 290/390/490 and/or the host device 280/380/480. In some examples, remotely starting the vehicle after the vehicle has entered a hibernation mode will require manually starting the vehicle. In some examples, the user interface 1100 may display a notification or alert indicating that the associated vehicle is about to enter a hibernation mode.

In some examples, determining that a vehicle has entered the hibernation mode via the remote device 290/390/490 and/or the host device 280/380/480 may not be possible, for example, if a wireless connection between the communication device (e.g., 116 in FIG. 1) and the remote device 290/390/490 or the host device 280/380/480 was lost at the end of the specified time period of vehicle inactivity, e.g., at the time the communication device (e.g., 116 in FIG. 1) would ordinarily send a notification or alert to the user interface 1100 that the vehicle is entering a hibernation mode. In such examples, start/stop button 1130 and/or slider 1132 may be operable, but the user interface 1100 may display an error notification or alert indicating that the vehicle did not receive a command.

In any of the preceding examples, it is contemplated the user interfaces (and functionality thereof) may be accessible and displayed via an app, for example, an app provided by the fleet owner/manager or vehicle manufacturer (e.g., a Remote Start/Ready to Run app). In such embodiments, it is contemplated that the app. may be hosted by the control system 150/250/350/450, for instance, when the control system embodies a web-based/cloud server. In any of the preceding examples, it is contemplated that the buttons are touch screen buttons, or may be replaced by other UIfeatures for making selections, or retrieving data, for example, sliders, text boxes, or any other suitable example of an input device disclosed herein. It is also contemplated that the arrangement and type of information made available (alerts, reports, settings) may be customizable by the user, e.g., to allow the user to personalize the user interface based on information that is the most relevant to the user.

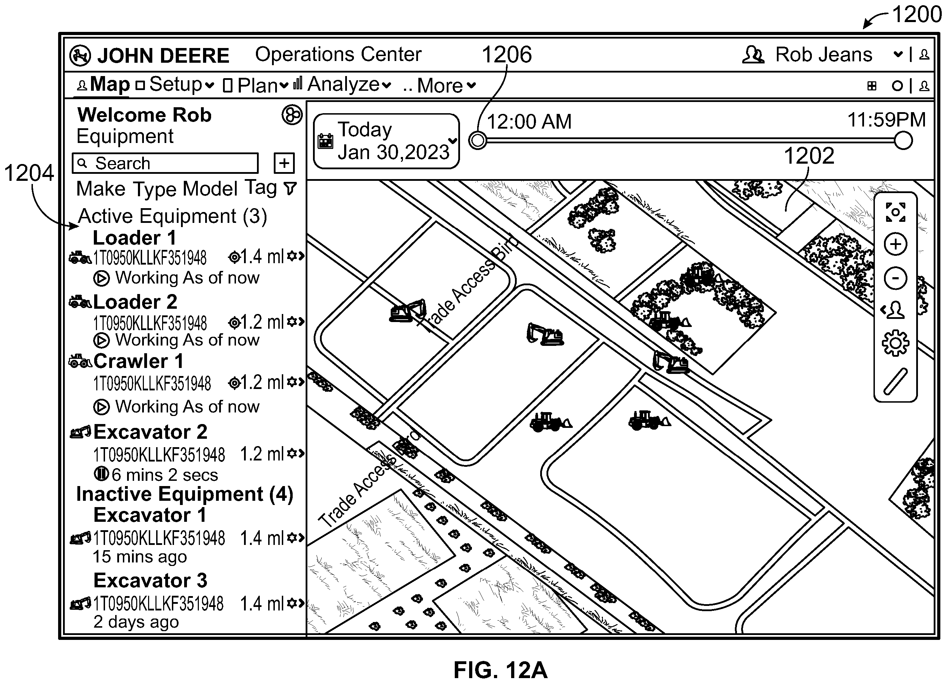

Turning now to FIGS. 12A-12D, examples of another graphical user interface 1200 are shown. In these embodiments, the user interface 1200 comprises a wider graphical display format, for example, when the user interface 1200 is a host device and/or remote device that is a laptop, a desktop, a tablet, a smart TV, or a monitor. Because the user interface 1200 shares similarities to the user interfaces described above, a detailed description thereof has been omitted for brevity.

As shown in FIG 12A, the user interface 1200 may display a map 1202 of one or more vehicles operated by a company, and display the map 1202 next to a list 1204 of active and inactive vehicles. In such embodiments, it is contemplated that the user may select more than one vehicle, to retrieve vehicle data to determine whether the one or more vehicles are ready for operation (e.g., wherein vehicle data satisfies startup criteria), to retrieve updated vehicle data to determine an operating status (e.g., wherein updated vehicle data satisfies post-start operating criteria), or to understand the utilization % of one or more vehicles. In this manner, the user interface 1200 is particularly beneficial for aiding the user (e.g., an owner, manager, etc.) to make decisions on which vehicles may be utilized for a particular job, day, work week, etc., to simultaneously perform a remote maintenance inspection and/or start one or more vehicles, and/or retrieve information as to whether some vehicles may require service, e.g., based on the vehicle data and/or updated vehicle data.

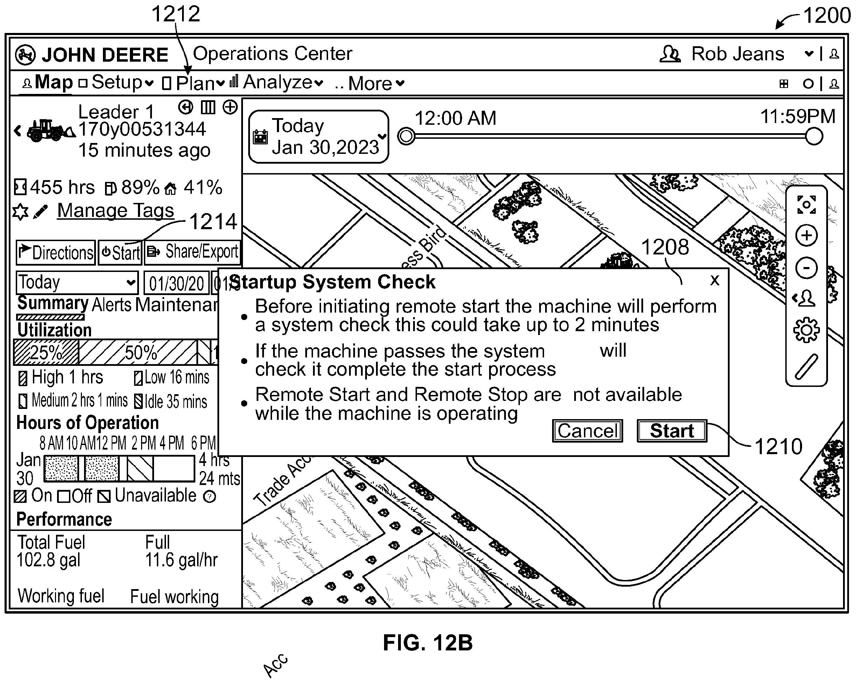

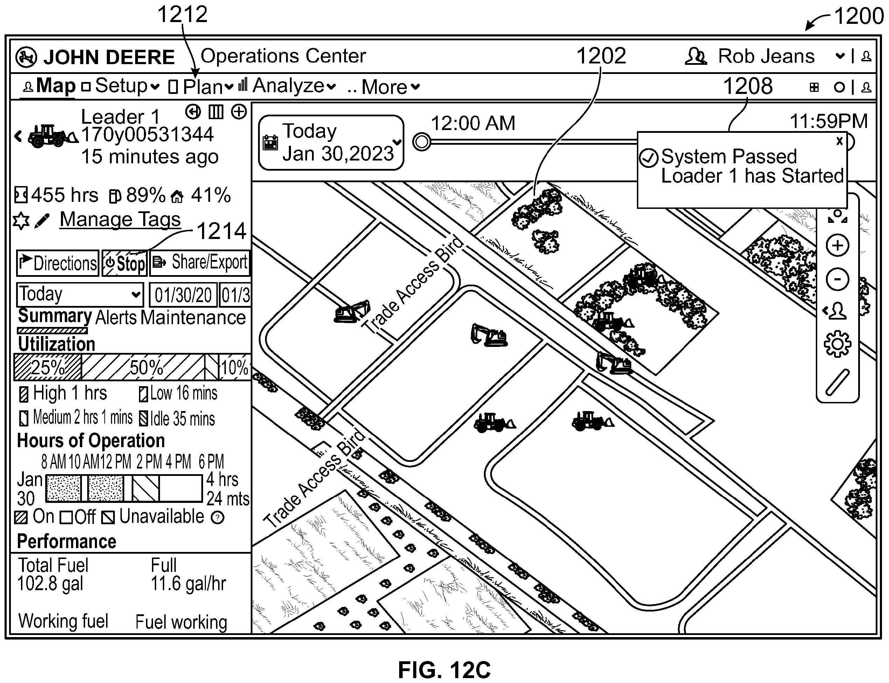

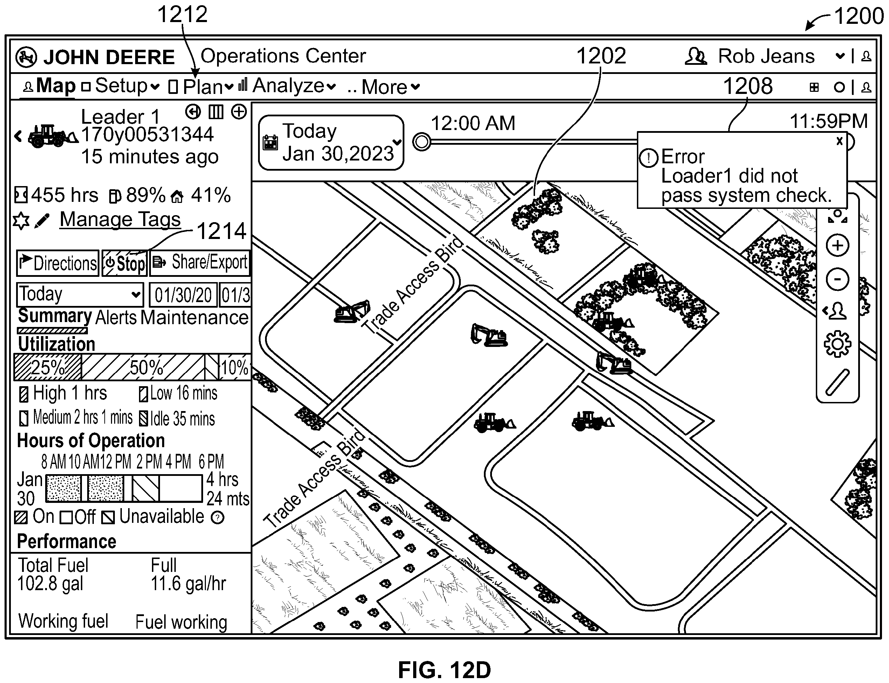

In this embodiment, the map has a slider 1206, operable to view a vehicle location history at various times of the day, e.g., by clicking on the slider 1206 and moving it to the left or right (e.g., via a mouse) to observe how one or more vehicle locations may have changed during a day. Referring to FIG. 12B, the user interface 1200 may display an alert or notification 1208 (e.g., a pop up) with a start button 1210 operable to commence a system check for one or more vehicles. For instance, clicking on the start/stop button 1210 may cause the control system 150, 250, 350, 450 to retrieve vehicle data, and compare the vehicle data relative to startup criteria, to determine a start status (e.g., ready to operate, or not ready to operate) for one or more vehicles. In the embodiment shown, there is one vehicle (Loader 1). It is conceivable that the user interface 1200 may be operable to select more than one vehicle (e.g., in the Active Equipment list of FIG. 12A) to simultaneously perform a system check therefor (e.g., when remotely starting more than one vehicle at once), or to simultaneously perform a remote maintenance inspection therefor (without starting the vehicles). It is conceivable that a user (e.g., via a host device) may utilize the user interface 1200 to program vehicle starting times, via a plan button or drop down menu 1212, or to begin a system check, or start one or more vehicles upon performing (e.g., passing) a system check. Referring to FIGS. 12C and 12D, when a vehicle has been selected by a user (e.g., Loader 1 as shown), the location of the selected vehicle will be shown on the map 1202 with a status thereof. For example, the status may be displayed via an alert or notification 1208 (FIGS. 12C and 12C). In some examples, the alert or notification may be colored, for example, green indicating that a vehicle has been started and is being operated, orange indicating that a vehicle did not pass system check, or is idle, etc.). As shown in FIGS. 12B-12D, the user interface 1200 may also display a start/stop button 1214 operable to remotely start the vehicle (e.g., after a system check), or in some examples, remotely stop the vehicle. In some embodiments, the start/stop button 1214 may be utilized to commence a system check (instead of button 1210). In this manner, it should be understood that a wide variety of user-interface arrangements may fall within the scope of the present disclosure.

Although the embodiments of the present invention have been illustrated in the accompanying drawings and described in the foregoing detailed description, it is to be understood that the present disclosure is not to be limited to just the embodiments disclosed, but that the disclosure described herein is capable of numerous rearrangements, modifications and substitutions without departing from the scope of the claims hereafter. For examples, features of one embodiment may be employed or substituted with the features of another embodiment. The terms "includes," "including," and "include" are inclusive and have the same scope as "comprises," "comprising," and "comprise," respectively. The claims as follows are intended to include all modifications and alterations insofar as they come within the scope of the claims or the equivalent thereof.

## Claims

1. A system for starting a vehicle, the system comprising:
a control system operatively connected to said vehicle via a communications network, said control system comprising a processor and a memory, wherein the control system comprises logic to:
receive vehicle data from said vehicle;
retrieve startup criteria associated with said vehicle;
compare said vehicle data relative to said startup criteria to generate a start status during a system check; and
control remote access to start said vehicle based on said start status.

2. The system of claim 1, wherein the control system further comprises logic to:
send a notification to a remote device and/or a host device indicating when said vehicle will be ready to operate based on said start status.

3. The system of claim 1 or claim 2, wherein the system further comprises a remote device operatively connected thereto, wherein the remote device includes a user interface adapted to graphically display at least one of a: location of said vehicle, the vehicle data, and said start status.

4. The system of claim 3, wherein the user interface is operable to remotely start the vehicle if said vehicle data satisfies said startup criteria.

5. The system of any one of the preceding claims, wherein the vehicle data comprises safety data and operating data, wherein said safety data comprises at least one of: a parking brake status, a hydraulic system status, a filter saturation level, a service panel position, a door position, an operator status, and wherein said operating data comprises at least one of a: a fuel level, a transmission fluid level, a hydraulic fluid level, an oil level, an oil filter status, a grease level, a power steering fluid level, a diesel emission fluid level, a battery charge level, an alternator status, tire pressure level, a hydraulic fluid pressure, a geographic location of the vehicle, a temperature of fuel, service hours, hours until next service, a temperature of a combustion chamber, a temperature of combustion air, a cabin temperature, a hydraulic fluid temperature, a transmission fluid temperature, an oil temperature, and a diagnostic trouble code.

6. The system of any one of the preceding claims, wherein the control system comprises logic to actuate a heating and cooling system of said vehicle when said vehicle data does not satisfy said startup criteria.

7. The system of any one of the preceding claims, wherein the control system further comprises logic to:
receive updated vehicle data from said vehicle; and
retrieve post-start operating criteria associated with said vehicle;
compare said updated vehicle data relative to said post-start operating criteria to generate an operating status; and
control power to said vehicle based on said operating status.

8. The system of claim 7, wherein the updated vehicle data comprises at least one of: an access panel position, a door position, a current fuel level, a current hydraulic fluid level, a current transmission fluid level, a current tire pressure, a current operator status, a trouble code, a current vehicle temperature, and a geographic location of said vehicle.

9. The system of claim 7, wherein the system further comprises a remote device communicatively coupled with the control system, wherein the remote device includes a user interface, wherein the user interface is adapted to display at least one of: the updated vehicle data, the operating status, and/or a location of said vehicle.

10. The system of any one of the preceding claims, wherein the control system further comprises logic to:
determine an operator status via a sensor operatively connected to said vehicle; and
control power to said vehicle based on said operator status.

11. The system of any one of the preceding claims, wherein the control system comprises logic to authenticate a start command to start said vehicle based on start command data and vehicle identifier data.

12. The system of any one of the preceding claims, wherein the system further comprises a remote device communicatively coupled with the control system, wherein the control system comprises logic to enable the remote device to start said vehicle via an app when said vehicle data satisfies the startup criteria.

13. The system of any one of the preceding claims, wherein the control system comprises logic to actuate an ignition system of said vehicle based on the start status.

14. The system of any one of the preceding claims, wherein the control system comprises logic to transmit a countdown to a remote device and/or a host device communicatively coupled with the control system, said countdown defining a time until said vehicle will be operational.

15. The system of any one of the preceding claims, wherein the control system comprises logic to actuate a light or a horn of said vehicle when said vehicle is being started.
